# EUROPEAN PATENT SPECIFICATION

(11) **EP 2 178 022 B1**
(45) Date of publication and mention of the grant of the patent: **09.11.2011**
(21) Application number: 09171131.7
(22) Date of filing: 23.09.2009
(51) Int. Cl.: G06K 7/00

(54) **RFID tag communication system and RFID tag communication apparatus**
RFID-Etikettkommunikationssystem und RFID-Etikettkommunikationsvorrichtung
Système de communication par étiquettes RFID et appareil de communication par étiquettes RFID

(30) Priority: 25.09.2008 JP 2008246423; 25.09.2008 JP 2008246424
(43) Date of publication of application: 21.04.2010
(73) Proprietor: Brother Kogyo Kabushiki Kaisha, Nagoya-shi, Aichi 467-8561 (JP)
(72) Inventor: Suzuki, Mikitoshi, Nagoya-shi Aichi 467-8561 (JP); Sugimoto, Masahiro, Nagoya-shi Aichi 467-8561 (JP); Nakamura, Kenichi, Nagoya-shi Aichi 467-8561 (JP)
(74) Representative: Prüfer & Partner GbR European Patent Attorneys

(56) References cited:
- WO-A-98/52168
- US-A1- 2008 055 048
- US-B1- 6 505 771

## Description

The present invention relates to an RFID tag communication system and RFID tag communication apparatus which are capable of communication by switching among a plurality of communication protocols.

### BACKGROUND ART

There are known RFID (radio frequency identification) systems for contactless (electromagnetic coupling method using a coil, electromagnetic induction method, or electromagnetic wave method) transmitting and receiving of information to/from an RFID tag, circuit element for storing information.

With such RFID systems, there are known RFID tag communication apparatuses capable of communication by selectively switching among a plurality of communication protocols (refer to JP, A, 2005-309726, for example). In this prior art, an operation terminal (upper system) and RFID tag communication apparatus (reader module) are provided. Then, once the operation terminal sends the command required for executing wireless communication based on a plurality of communication protocols (communication standards) to the RFID tag communication apparatus, the RFID tag communication apparatus sends and receives information with the RFID circuit element while consecutively switching the communication protocol in accordance with the received command, and sends the information transmission and reception results all at once to the operation terminal. With this arrangement, it is possible to shorten the processing time compared to a case where the operation of sending the command from the operation terminal to the RFID tag communication apparatus and returning the information transmission and reception results from the RFID tag communication apparatus to the operation terminal is repeated on a per communication protocol basis.
US-6,505,771 B1 discloses a generic apparatus and system having the featureS of the preambleS of claims 1 and 10, respectively.

### DISCLOSURE OF THE INVENTION

### Problem to be Solved by the Invention

In the above prior art, information transmission and reception are performed while the communication protocol is consecutively switched in the RFID tag communication apparatus, making it possible to consecutively read and write information with a plurality of types of RFID circuit elements corresponding to mutually different communication protocols.

Nevertheless, in the above prior art, reuse of the results when information transmission and reception succeeded (that is, information indicating which RFID circuit element, or in other words, which tag ID, succeeded in information transmission and reception using which communication protocol) is not particularly taken into consideration. As a result, even in a case where information transmission and reception are performed once again with an RFID circuit element that had once succeeded in information transmission and reception, the RFID tag communication apparatus will once again perform information transmission and reception while consecutively switching the defined communication protocols in accordance with the command received from the operation terminal. As a result, there is increased wasted communication, making it impossible to achieve efficient information transmission and reception. Further, in a case where the contents of the command from the operation terminal (that is, the type of the communication protocol to which the protocol is to be switched) has changed since the time the above information transmission and reception succeeded, the possibility exists that information transmission and reception may not succeed a second time, despite the first success. Thus, the above prior art is not capable of highly reliable information transmission and reception.

[0000] On the other hand, in general, in a case where an RFID tag communication system is used for article management or the like, information transmission and reception are performed, for example, with an RFID circuit element provided to a first target object, which is an article (nametag or ID card) related to a person, and with a separate RFID circuit element provided to a second target object, which is an article (book, document, piece of equipment, etc.) transportable by the person, thereby requiring that the information (tag ID, etc.) acquired from each be mutually associated. This association process is normally performed using information acquired at one time (simultaneously). This makes it possible to execute article take-out or check-out management, including management of information such as who took out an article and whether or not the article was returned. Note that the RFID circuit element of the first target object and the RFID circuit element of the second target object preferably have mutually different communication protocols to prevent interference and erroneous reading.

[0000] At this time, in the above prior art, information transmission and reception are performed while the communication protocol is consecutively switched in the RFID tag communication apparatus, making it possible to consecutively read and write information with a plurality of types of RFID circuit elements corresponding to mutually different communication protocols. Nevertheless, the prior art does not take into particular consideration such information transmission and reception performed with a plurality of types of RFID circuit elements at the same time. As a result, even if the information acquired from the plurality of types of RFID circuit elements is mutually associated in the RFID tag communication apparatus of the above prior art, this information is not always information acquired at one time (simultaneously) and thus the association is not always an appropriate association of, for example, the article and the person who took out that article, in the above example. Thus, even in a case where the above prior art is used for article management, etc., highly reliable information transmission and reception cannot be achieved.

It is therefore an object of the present invention to provide an RFID tag communication system and RFID tag communication apparatus capable of achieving highly reliable information transmission and reception. This object in achieved by the apparatus and system having the features of claimS 1 and 10, reSpectively.

[0000] In the RFID tag communication apparatus of the present invention, the storage processing means performs predetermined storage processing while associating with each communication protocol a plurality of tag identification information acquired using a plurality of mutually different communication protocols. With this arrangement, it is possible to respectively store the tag identification information of each RFID circuit element in association with the corresponding communication protocol for a plurality of RFID circuit elements having mutually different communication protocols, or store tag identification information and, further, corresponding target objects in mutual association for a plurality of RFID circuit elements that exist in the same communication range and have mutually different communication protocols. This enables reliable discriminatory use of the communication protocols that match each RFID circuit element for a plurality of RFID circuit elements having mutually different communication protocols, thereby ensuring highly reliable information transmission and reception. Additionally, because mutually different target objects, such as persons and articles, can be appropriately associated, it is possible to ensure highly reliable information transmission and reception in a case where the system is used for article management or the like.

### BRIEF DESCRIPTION OF THE DRAWINGS

[0268]
FIG. 1 is a system configuration diagram illustrating an RFID tag communication system comprising an RFID tag communication apparatus according to embodiment 1 of the present invention.
FIG. 2 is a functional block diagram illustrating the functional configuration of the overall RFID tag communication system.
FIG. 3 is a block diagram illustrating one example of functional configuration of process control within an operation terminal.
FIG. 4 is a functional block diagram illustrating the detailed configuration of the radio frequency circuit of an RFID tag communication system.
FIG. 5 is a functional block diagram illustrating an example of the functional configuration of an RFID circuit element provided in an RFID tag.
FIG. 6 is a flowchart indicating the control contents executed by the CPU of the operation terminal when information is read from an RFID circuit element.
FIG. 7 is a flowchart indicating the control contents executed by the CPU of the RFID tag communication apparatus when information is written to an RFID circuit element.
FIG. 8 is a flowchart illustrating the detailed contents of the protocol registration processing of step S300.
FIG. 9 is a table indicating an example of the stored contents of the storage part of the communication processing part of the operation terminal after protocol registration processing.
FIG. 10 is a table indicating an example of the stored contents of the storage part of the communication processing part of the operation terminal after protocol registration processing in a modification where a communication parameter is associated and stored.
FIG. 11 is a front view illustrating the overall structure of the RFID tag communication apparatus of a modification in which the RFID tag communication apparatus comprises all functions.
FIG. 12 is a functional block diagram illustrating the functional configuration of the RFID tag communication apparatus of a modification in which the RFID tag communication apparatus comprises all functions.
FIG. 13 is a block diagram illustrating an example of the functional configuration of processing control within the operation terminal of embodiment 2 of the present invention.
FIG. 14 is a flowchart illustrating the control contents executed by the CPU of the operation terminal.
FIG. 15 is a flowchart illustrating the control contents executed by the CPU of the operation terminal in a modification in which two passes are made through the protocols and output is performed if the acquired results match.
FIG. 16 is a flowchart illustrating the control contents executed by the CPU of the operation terminal in a modification where passes are made through the protocols for a predetermined period of time.
FIG. 17 is a block diagram illustrating an example of the functional configuration of the processing control within the operation terminal in a modification in which the communication processing part comprises tag ID and target object link information.
FIG. 18 is a flowchart indicating the control contents executed by the CPU of the operation terminal in a modification in which the communication processing part comprises tag ID and target object link information.
FIG. 19 is a block diagram illustrating an example of the functional configuration of the processing control within the operation terminal in a modification in which the application processing part comprises tag ID and target object link information.
FIG. 20 is a flowchart indicating the control contents executed by the CPU of the operation terminal in a modification in which the application processing part comprises tag ID and target object link information.

### BEST MODE FOR CARRYING OUT THE INVENTION

In the following, some embodiments of the present invention will be described with reference to the accompanying drawings. First, description will be made below regarding embodiment 1 of the present invention.

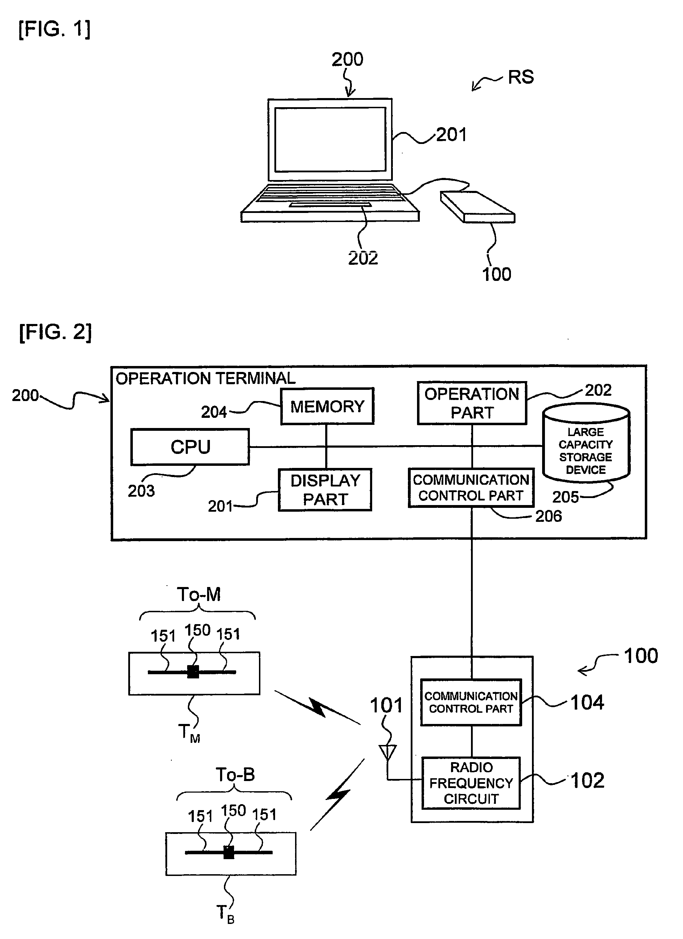

An RFID tag communication system comprising an RFID tag communication apparatus of the present embodiment is described by using Fig 1.

An RFID tag communication system RS illustrated in FIG. 1 comprises an RFID tag communication apparatus 100 capable of communication by selectively switching among a plurality of mutually different communication protocols, and an operation terminal 200, which is connected with the RFID tag communication apparatus 100 via an interface such as a USB, for example, and is capable of operating the RFID tag communication apparatus 100. The operation terminal 200 is a commercially-sold general-purpose personal computer, which has a display part 201, such as a liquid crystal display, and an operation part 202, such as a keyboard or mouse. Note that, while the case illustrated here is one where the RFID tag communication apparatus 100 and the operation terminal 200 are connected by wire, they can also be wirelessly connected via wireless communication.

As shown in FIG. 2, the operation terminal 200 comprises a CPU (central processing unit) 203, a memory 204 comprising RAM or ROM, for example, the operation part 202 into which instructions and information from the operator are inputted, the display part 201 configured to display various information and messages, a large-capacity storage device 205 that comprises a hard disk device and is configured to store various information, and a communication control part 206 configured to control the reception of information signals with the RFID tag communication apparatus 100 via an interface connection compliant with standards, such as USB standards.

The CPU 203 processes signals in accordance with a program stored in advanced in ROM while utilizing the temporary storage function of RAM, thereby transmitting and receiving various instruction signals and information signals to and from the RFID tag communication apparatus 100.

On the other hand, the RFID tag communication apparatus 100 is a reader/writer capable of reading and writing information from and to a plurality of RFID circuit elements To, each of which comprises an IC circuit part 150 which stores information and a tag antenna 151 which transmits and receives information, by selectively switching among a plurality of mutually different communication protocols as described above. Here, as examples of the plurality of communication protocols to which the protocol is switched by the RFID tag communication apparatus 100, ISO (International Organization for Standardization)/IEC 14443 Type A or Type B, ICO/IEC 15693, Felica (registered trademark) and so forth can be cited.

This RFID tag communication apparatus 100 comprises a communication antenna 101 that forms a communication range (not shown) that includes a plurality of RFID circuit elements To corresponding to a plurality of communication protocols, each comprising the IC circuit part 150 configured to store information and the tag antenna 151 configured to transmit and receive information, and performs wireless communication with the plurality of RFID circuit elements To; a radio frequency circuit 102 configured to access by wireless communication the IC circuit part 150 of the RFID circuit element To via the communication antenna 101, and process a signal read from that RFID circuit element To; and a communication control part 104 configured to control the communication performed with the operation terminal 200. The above-described radio frequency circuit 102 and the CPU 203 of the operation terminal 200 are capable of transmitting and receiving information via communication control parts 104 and 206.

FIG. 2 illustrates as an example of a case where the RFID tag communication apparatus 100 performs wireless communication with RFID tags T (RFID tags T_{M}, T_{B}) corresponding to two different communication protocols via the communication antenna 101. Here, the RFID tag T_{M} comprises an RFID circuit element To-M comprising the tag antenna 151 configured to transmit and receive information using a protocol A (ISO/IEC 15693, etc.) as the communication protocol and the ICD circuit part 150 configured to store information, and is provided to an object (nametag, ID card, or the like) associated with a person, for example. In the IC circuit part 150 of the RFID circuit element To-M is written information of the corresponding person, such as the person's name, gender, age, and address.

On the other hand, the RFID tag T_{B} comprises an RFID circuit element To-B comprising the tag antenna 151 configured to transmit and receive information using a protocol B (ISO/IEC 14443 Type A, etc.) as the communication protocol and the ICD circuit part 150 configured to store information, and is provided to an object (book, file, piece of equipment, or the like) taken out or checked out by the person, for example. In the IC circuit part 150 of the RFID circuit element To-B is written article information indicating the article name, file contents, equipment number, or the like.

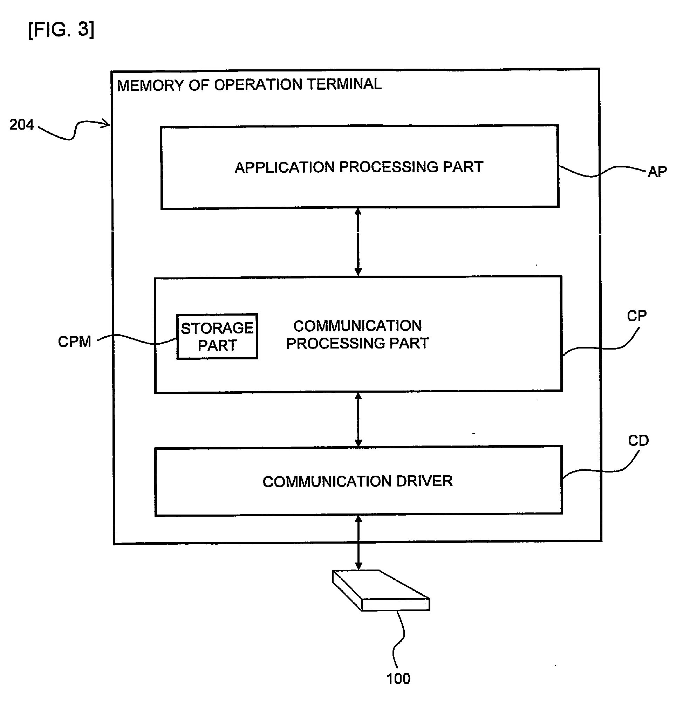

As illustrated in FIG. 3, a plurality of application programs, communication processing programs and communication driver programs open and start up in the above-described memory (RAM) 204 of the operation terminal 200, and an application processing part AP, communication processing part CP and communication driver CD, which are functionally configured by the startup of these programs, become capable of transmitting and receiving instruction signals and information signals to and from each other. Also, the communication driver CD is configured to transmit and receive signals to and from the RFID tag communication apparatus 100 via the interface connection between the above-described communication control parts 206 and 104.

The above-described application processing part AP performs processing in accordance with predetermined application programs in response to operations inputs by an operator by means of the above-described operation part 202, and generates corresponding processing instruction signals (read commands, write commands and the like), and outputs them to the communication processing part CP. The communication processing part CP generates corresponding control signals based on the processing instruction signals generated by the above-described application processing part AP, and controls the RFID tag communication apparatus 100 by transmitting them to the RFID tag communication apparatus 100 via the communication driver CD.

The communication processing part CP comprises a storage part CPM which is functionally configured by the startup of the above-described communication processing programs and, when wireless communication with the RFID circuit element To succeeds in the RFID tag communication apparatus 100, stores the tag ID of that RFID circuit element To in association with the communication protocol used at the time communication succeeded. That is, in the example illustrated in the above-described FIG. 2, the storage part CPM stores the tag ID of the RFID circuit element To-M of the RFID tag T_{M} in association with the communication protocol A, and stores the tag ID of the RFID circuit element To-B of the RFID tag T_{B} in association with the communication protocol B, as predetermined storage processing. Note that a part of the memory 204 (or a part of the large-capacity storage device 205) is used as the memory of this storage part CPM.

With this arrangement, when a processing instruction signal (read command) that provides instructions for reading information from the RFID circuit element To-M or the RFID circuit element To-B is inputted from the application processing part AP after wireless communication has succeeded with the RFID circuit element To, the communication processing part CP refers to the stored contents of the storage part CPM and controls the RFID tag communication apparatus 100 to ensure that information is read using the corresponding protocol A or the corresponding protocol B. Similarly, when a processing instruction signal (write command) that provides instructions for writing information to the RFID circuit element To-M or the RFID circuit element To-B is inputted from the application processing part AP, the communication processing part CP refers to the stored contents of the storage part CPM and controls the RFID tag communication apparatus 100 to ensure information is written using the corresponding protocol A or the corresponding protocol B.

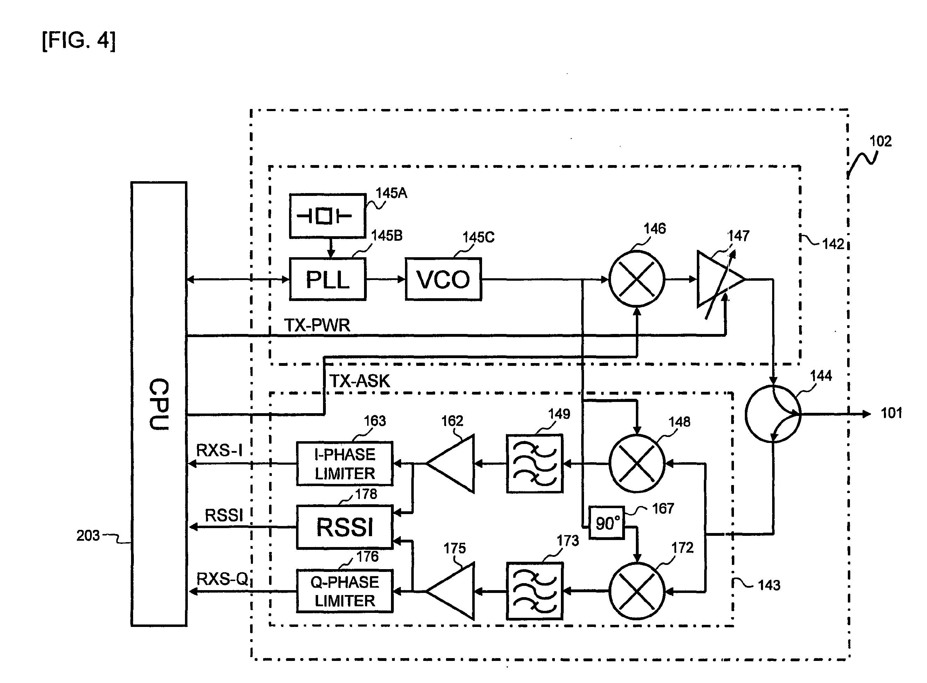

As shown in FIG. 4, the radio frequency circuit 102 accesses the information of the IC circuit part 150 of the RFID circuit element To (the RFID circuit elements To-M and To-B in the example shown in FIG. 2; the same hereafter) of the RFID tag T (the RFID tag T_{M} and T_{B} in the example shown in FIG. 2; the same hereafter) via the communication antenna 101. In the radio frequency circuit 102, signals read from the IC circuit part 150 of the RFID circuit element To of the RFID tag T, which are generated by the CPU 203 of the operation terminal 200, are processed to read the information, and various commands for accessing and writing the prescribed information to the IC circuit part 150 of the RFID circuit element To are inputted via the communication control parts 206 and 104. Note that illustrations of the communication control parts 206 and 104 are omitted in FIG. 4 to avoid confusion.

The radio frequency circuit 102 comprises a transmitting portion 142 which transmits signals to the RFID circuit element To of the RFID tag T via the communication antenna 101, a receiving portion 143 which inputs a response wave from the RFID circuit element To received via the communication antenna 101, and a transmit-receive splitter 144.

The transmitting portion 142 is a block which generates an interrogation wave for accessing the RFID tag information of the IC circuit part 150 of the RFID circuit element To. That is, the transmitting portion142 comprises a crystal oscillator 145A configured to output a frequency reference signal, a PLL (Phased Locked Loop) 145B and VCO (Voltage Controlled Oscillator) 145C configured to divide/multiply the frequency of the output of the crystal oscillator 145A to generate a carrier wave of a predetermined frequency based on control by the CPU 203, a transmission multiplying circuit 146 configured to modulate the above-described carrier wave generated based on the signal supplied from the above-described CPU 203 (in this example, perform amplitude modulation based on a "TX_ASK" signal from the CPU 203) (an amplifier with a variable amplification factor and the like may also be used in the case of amplitude modulation), and a gain control transmission amplifier 147 configured to amplify the modulated wave modulated by the transmission multiplying circuit 146 (in this example, perform amplification by an amplification factor determined by a "TX_PWR" signal from the CPU 203) to generate a desired interrogation wave. With such an arrangement, the carrier waves generated as described above employ a frequency in the UHF band (or microwave band, or short-wave band), and the output signal from the above-described gain control transmission amplifier 147 is transmitted to the communication antenna 101 via the transmit-receive splitter 144, whereby the output signal is supplied to the IC circuit part 150 of the RFID circuit element To. It should be noted that the interrogation wave is not limited to a signal modulated as described above (modulated wave), but may be transmitted simply by a carrier wave.

The receiving portion 143 comprises an I-phase receiving signal multiplying circuit 148 configured to multiply and demodulate the response wave from the RFID circuit element To received by the communication antenna 101 and the above-described carrier wave, an I-phase bandpass filter 149 for extracting only the signal of the required band from the output of the I-phase receiving signal multiplying circuit 148, an I-phase receiving signal amplifier 162 configured to amplify the output of the I-phase bandpass filter 149, an I-phase limiter 163 configured to further amplify the output of the I-phase receiving signal amplifier 162 and convert the amplified output to a digital signal, a Q-phase receiving signal multiplying circuit 172 configured to multiply the response wave from the RFID circuit element To received by the above-described communication antenna 101 and a signal wherein the phase of the above-described carrier wave was delayed 90 by a phase shifter 167, a Q-phase bandpass filter 173 for extracting only the signal of the required band from the output of the Q-phase receiving signal multiplying circuit 172, a Q-phase receiving signal amplifier 175 configured to amplify the output of the Q-phase bandpass filter 173, and a Q-phase limiter 176 configured to further amplify the output of the Q-phase receiving signal amplifier 175 and convert the amplified output to a digital signal. A signal "RXS-I," which is output from the above-described I-phase limiter 163, and a signal "RXS-Q," which is output from the Q-phase limiter 176, are inputted to the above-described CPU 203 for further processing.

Furthermore, the output signals of the I-phase receiving signal amplifier 162 and the Q-phase receiving signal amplifier 175 are also inputted to an RSSI (Received Signal Strength Indicator) circuit 178, which functions as strength detecting means. The signal "RSSI" which indicates the strength of these signals is inputted to the CPU 203. As a result, the RFID tag communication apparatus 100 is able to detect the received signal strength of the signal from the RFID circuit element To during communication with the relevant RFID circuit element To.

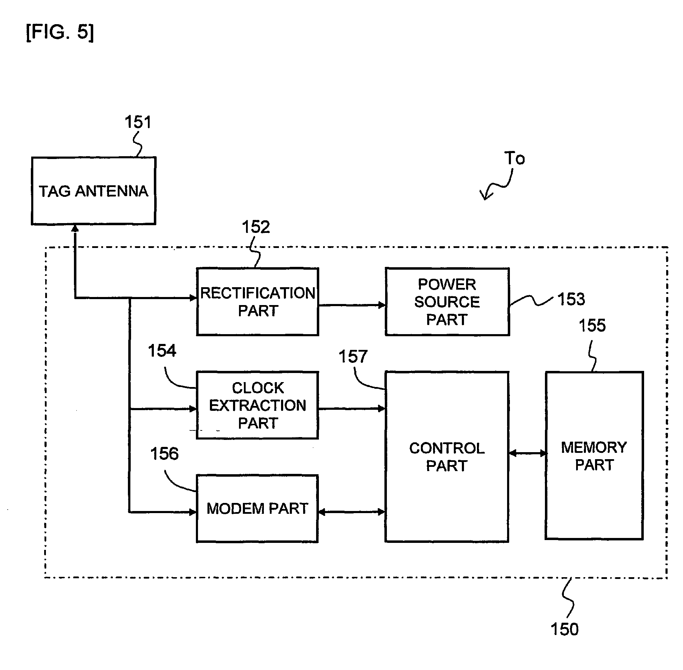

An example of the functional configuration of the RFID circuit element To contained in the RFID tag T (the RFID circuit elements To-M and To-B contained in the RFID tags T_{M} and T_{B} in the example shown in FIG. 2) is described by using Fig 5.

In FIG. 5, the RFID circuit element To comprises the above-described tag antenna 151 configured to transmit and receive signals in a contactless manner with the communication antenna 101 of the RFID tag communication apparatus 100 as described above, and the above-described IC circuit part 150 connected to this tag antenna 151.

The IC circuit part 150 comprises a rectification part 152 configured to rectify the interrogation wave received via the tag antenna 151, a power source part 153 configured for use as a driving power source to store the energy of the interrogation wave rectified by the rectification part 152, a clock extraction part 154 configured to extract a clock signal from the interrogation wave received via the above-described tag antenna 151 and supply the clock signal thus extracted to a control part 157, a memory part 155 which is able to store predetermined information signals, a modem part 156 connected to the above-described tag antenna 151, and the above-described control part 157 for controlling the operation of the above-described RFID circuit element To via the above-described memory part 155, clock extraction part 154, modem part 156, and so forth.

The modem part 156 demodulates an interrogation wave from the communication antenna 101 of the above-described RFID tag communication apparatus 100 received via the tag antenna 151, and it modulates a reply signal from the above-described control part 157, and transmits it as a response wave (signal which includes a tag ID) from the tag antenna 151.

The clock extraction part 154 extracts the clock component from the received signal, and supplies the clock corresponding to the frequency of the relevant clock component thus extracted to the control part 157.

The control part 157 executes basic control, such as interpreting a received signal demodulated by the above-described modem part 156, generating a reply signal based on the information signal stored in the memory part 155, and returning the reply signal from the above-described tag antenna 151 via the above-described modem part 156.

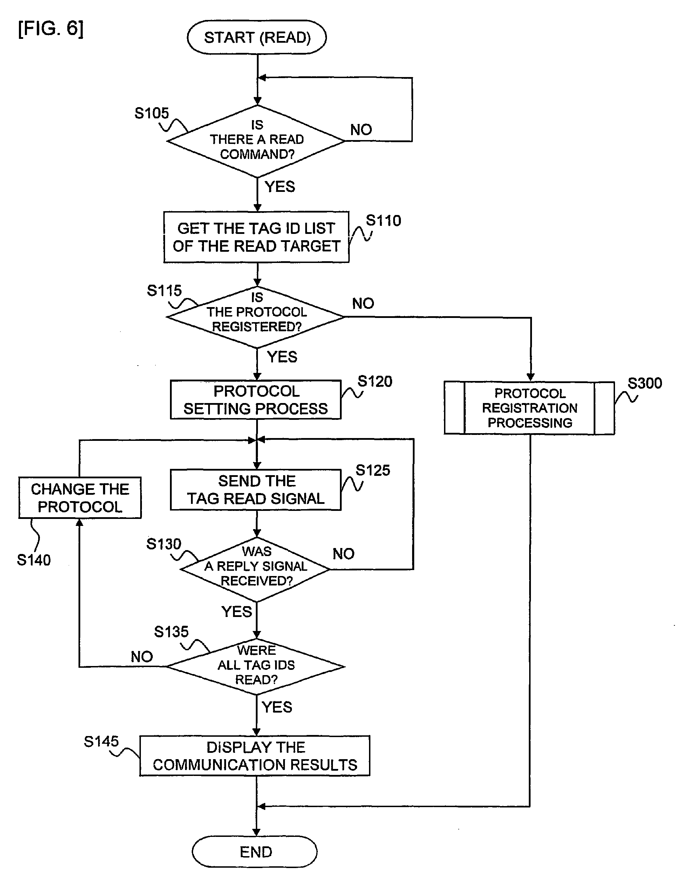

The control procedure performed by the CPU 203 of the operation terminal 200 during information reading with the RFID circuit element To is described by using Fig 6.

In step S105, the CPU 203 assesses whether or not an information read command that starts information reading from the RFID circuit element To has been inputted by the operator based on the operation input signal from the operation part 202. This step is repeated until an information read command is inputted and, once the command is inputted and the decision is made that the condition is satisfied, the flow proceeds to step S110. It should be noted that when the information read command is inputted, the CPU 203 in the application processing part AP performs processing in accordance with the corresponding application program, generates the corresponding processing instruction signal (a read command in this case), and outputs that signal to the communication processing part CP.

In step S110, the CPU 203 acquires the tag ID list of the RFID circuit element To that is the read target. The tag ID is acquired by referring to the link information (information associating the target object information and tag ID) registered in the memory 204 or the large-capacity storage device 205 in advance, based on the target object information (person name, article name, etc.) inputted by the operator using the operation part 202, for example.

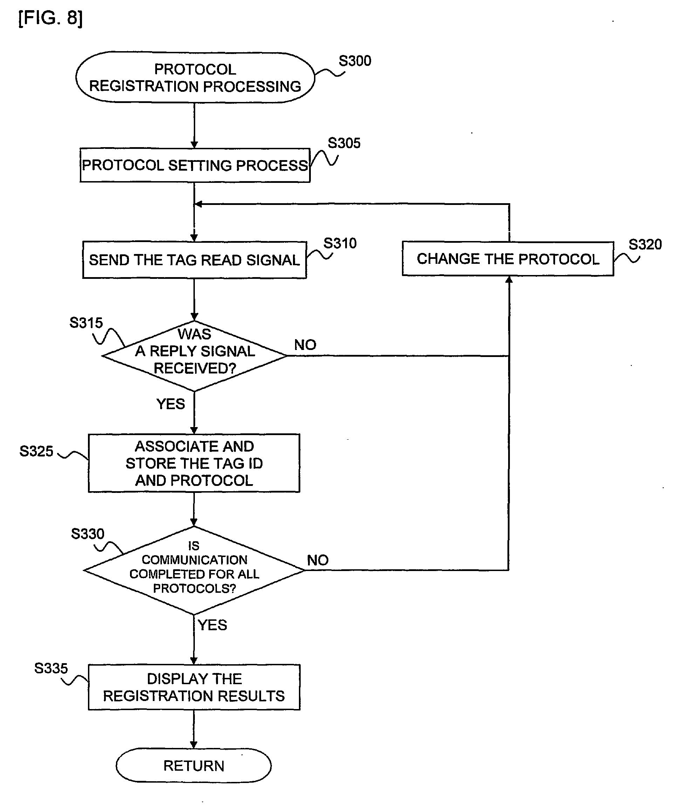

In step S115, the CPU 203 refers to the storage part CPM of the communication processing part CP and assesses whether or not all communication protocols respectively associated with each tag ID included in the acquired tag ID list have been stored. In a case where the communication protocols associated with the tag IDs included in the tag ID list have not been stored in whole or in part in the storage part CPM (in other words, excluding cases where the communication protocols of all tag IDs included in the tag ID list have been stored), the decision is made that the condition is not satisfied and the flow proceeds to step S300. In this step S300, the CPU 203 performs protocol registration processing (for details, refer to FIG. 8 described later) where tag ID related communication protocols that have not been stored are stored in the storage part CPM of the communication processing part CP, and the flow ends. On the other hand, in a case where all communication protocols of the tag IDs included in the tag ID list have been stored in the storage part CPM of the communication processing part CP, the decision is made that the condition is satisfied and the flow proceeds to step S120.

In step S120, the CPU 203 in the communication processing part CP sets the protocol that enables wireless communication using the communication protocol corresponding to the tag ID of the RFID circuit element To that is to first perform information reading from among all communication protocols of the tag IDs included in the acquired tag ID list, based on the storage contents of the storage part CPM.

In step S125, based on the processing instruction signal (the read command in this case) outputted from the application processing part AP, the CPU 203 in the communication processing part CP sends the control signal corresponding to the set communication protocol to the radio frequency circuit 102 of the RFID tag communication apparatus 100 via the communication control parts 206 and 104 and specifies the tag ID that is the read target so that an interrogation wave subjected to predetermined modulation is sent as a tag read signal for reading the data stored in the memory part 155 of the applicable RFID circuit element To, via the communication antenna 101 to the RFID circuit element To that exists within the communication range.

In step S130, the CPU 203 assesses whether or not a reply signal from the RFID circuit element To within the communication range has been received via the communication control parts 104 and 206 in response to the tag read signal. In a case where a reply signal has not been received, the decision is made that the condition is not satisfied and the flow returns to the step S125 where the control signal is sent to the radio frequency circuit 102 to send the tag read signal once again (retry). Note that, while omitted in the FIG. 6, in a case where this reattempt is performed a predetermined set number of times and a reply signal is not received during that period, the corresponding processing (error display on the display part 201, for example) is performed. On the other hand, in a case where a reply signal was received, the decision is made that the condition is satisfied and the flow proceeds to step S135.

In step S135, the CPU 203 assesses whether or not information reading has been performed for all tag IDs (RFID circuit elements To related to all tag IDs; hereinafter the same) included in the tag ID list acquired in the step S110. In a case where information has not been read for all tag IDs, the decision is made that the condition is not satisfied and the flow proceeds to step S140 where the protocol setting is changed to enable wireless communication using the communication protocol corresponding to the next tag ID in the tag ID list. Subsequently, the flow returns to step S125 where information reading is performed with the next tag ID. On the other hand, in a case where information reading has been performed for all tag IDs, the decision is made that the condition is satisfied and the flow proceeds to step S145.

In step S145, the CPU 203 outputs a control signal to the display part 201, and displays the information read result of the step S120 to step S140. With the above, the flow ends.

Note that while in the above information reading is only performed in a case where all communication protocols of the tag IDs included in the tag ID list have been stored in the storage part CPM of the operation terminal 200, and protocol registration processing is performed in a case where the communication protocols of at least one of the tag IDs in the tag ID list have not been stored, the present invention is not limited thereto. For example, in a case where at least one communication protocol of the tag IDs in the tag ID list has been stored, information reading may be performed for that tag ID while protocol registration processing is performed for the remaining tag IDs only.

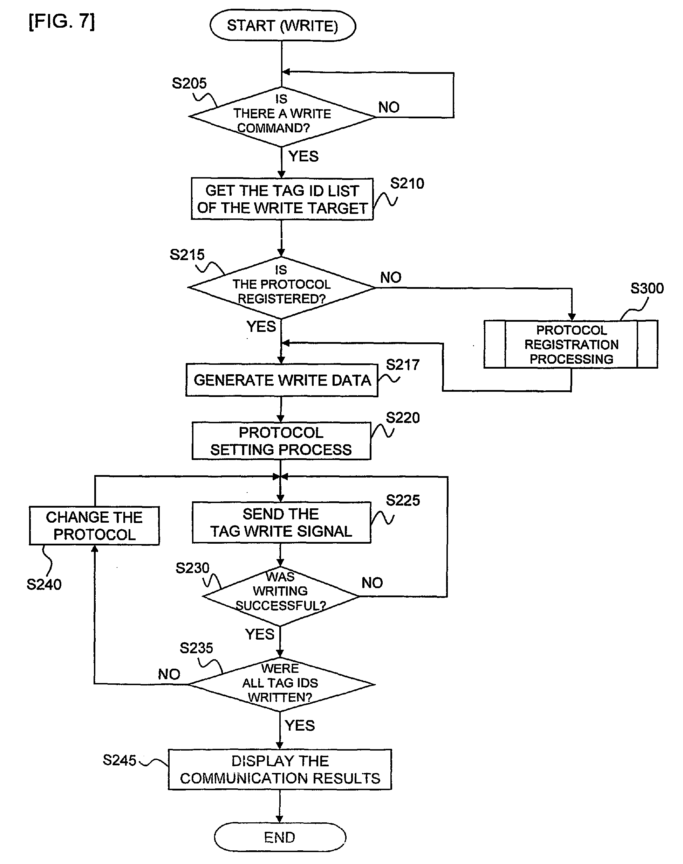

The control procedure performed by the CPU 203 of the RFID tag communication apparatus 100 during information writing to the RFID circuit element To is described by using Fig 7.

In step S205, the CPU 203 assesses whether or not an information write command that starts information writing to the RFID circuit element To has been inputted by the operator based on the operation input signal from the operation part 202. This step is repeated until an information write command is inputted and, once the command is inputted and the decision is made that the condition is satisfied, the flow proceeds to step S210. It should be noted that when the information write command is inputted, the CPU 203 in the application processing part AP performs processing in accordance with the corresponding application program, generates the corresponding processing instruction signal (a write command in this case), and outputs that signal to the communication processing part CP.

In step S210, the CPU 203 acquires the tag ID list of the RFID circuit element To that is the write target. This tag ID list may be inputted by the operator using the operation part 202, or acquired by reading information registered in advance in the memory 204 or the large-capacity storage device 205.

In step S215, the CPU 203 refers to the storage part CPM of the communication processing part CP and assesses whether or not all communication protocols respectively associated with each tag ID included in the acquired tag ID list have been stored. In a case where the communication protocols associated with the tag IDs included in the tag ID list have not been stored in whole or in part in the storage part CPM (in other words, excluding cases where the communication protocols of all tag IDs included in the tag ID list have been stored), the decision is made that the condition is not satisfied and the flow proceeds to step S300. In this step S300, the CPU 203 performs the protocol registration processing (for details, refer to FIG. 8 described later) where tag ID related communication protocols that have not been stored are stored in the storage part CPM of the communication processing part CP, and the flow proceeds to step S217 described later. On the other hand, in a case where all communication protocols of the tag IDs included in the tag ID list have been stored in the storage part CPM of the communication processing part CP, the decision is made that the condition is satisfied and the flow proceeds to step S217.

In step S217, the CPU 203 generates write data for writing to the IC circuit part 150 of the circuit RFID element To, based on the operation input signal from the operation part 202 inputted by the operator. The write data, in the example illustrated in FIG. 2, for example, are personal information, indicating the name, gender, age, address, etc., of the corresponding person, in the RFID circuit element To-M; and article information, indicating the article name, file contents, equipment number, etc., of the corresponding article, in the RFID circuit element To-B.

In step S220, the CPU 203 in the communication processing part CP sets the protocol that enables wireless communication using the communication protocol corresponding to the tag ID of the RFID circuit element To that is to first perform information writing from among all communication protocols of the tag IDs included in the acquired tag ID list, based on the storage contents of the storage part CPM.

In step S225, based on the processing instruction signal (the write command in this case) outputted from the application processing part AP, the CPU 203 in the communication processing part CP outputs the control signal corresponding to the above-described set communication protocol to the radio frequency circuit 102 of the RFID tag communication apparatus 100 via the communication control parts 206 and 104 and specifies the tag ID that is the write target so that an interrogation wave subjected to predetermined modulation is sent to the RFID circuit element To that exists within the communication range via the communication antenna 101 as a tag write signal for writing write data created in the step S217 to the memory part 155 of the applicable RFID circuit element To.

In step S230, the CPU 203 assesses whether or not information writing to the RFID circuit element To has succeeded. Specifically, the CPU 203 outputs a control signal to the radio frequency circuit 102 of the RFID tag communication apparatus 100 via the communication control parts 206 and 104, and an information read signal is sent to the RFID circuit element To that performed information writing. In response, a reply is sent from the RFID circuit element To and the CPU 203 checks the information stored within the memory part 155 of the RFID circuit element To based on the reply signal received via the communication control parts 104 and 206, and assesses whether or not the above-described write data have been properly stored in the memory part 155 using a known error-detecting code [CRC (Cyclic Redundancy Check) code or the like]. In a case where information writing has not been completed normally, the decision is made that the condition is not satisfied, the flow returns to the step S225 where the control signal is sent to the radio frequency circuit 102 to send the tag write signal once again (retry). Note that, while omitted in the FIG. 7, in a case where this reattempt is performed a predetermined set number of times and information writing does not succeed during that period, the corresponding processing (error display on the display part 201, for example) is performed. On the other hand, in a case where information writing is completed normally, the decision is made that the condition is satisfied and the flow proceeds to step S235.

In step S235, the CPU 203 assesses whether or not information writing has been performed for all tag IDs (the RFID circuit elements To related to all tag IDs; hereinafter the same) included in the tag ID list acquired in the step S210. In a case where information writing has not been performed for all tag IDs, the decision is made that the condition is not satisfied and the flow proceeds to step S240 where the protocol setting is changed to enable wireless communication using the communication protocol corresponding to the next tag ID in the tag ID list. Subsequently, the flow returns to the earlier step S225, and information writing is performed with the next tag ID. On the other hand, in a case where information writing has been performed for all tag IDs, the decision is made that the condition is satisfied and the flow proceeds to step S245.

In step S245, the CPU 203 outputs a control signal to the display part 201, and displays the information write result of the step S217 to step S240. With the above, the flow ends.

Note that while in the above information writing is performed only in a case where all communication protocols of the tag IDs included in the tag ID list are stored in the storage part CPM of the operation terminal 200, and protocol registration processing is performed in a case where one or more communication protocols of the tag IDs in the tag ID list have not been stored, in a case where communication protocols have been stored for at least one of the tag IDs in the tag ID list, information writing may be executed for that tag ID while protocol registration processing is performed for the remaining tag IDs only, as indicated in the aforementioned FIG. 6.

The detailed procedure of the protocol registration processing of the above-described step S300 is described by using Fig 8.

In step S305, the CPU 203 sets the communication protocol in the communication processing part CP. In this embodiment, a plurality of communication protocols that are to be consecutively switched are set in advance and registered (in the memory 204 or the large-capacity storage device 205) during protocol registration processing and, in step S305, the protocol is set to enable wireless communication using the first communication protocol among the plurality of registered communication protocols.

In step S310, the CPU 203 in the communication processing part CP sends the control signal corresponding to the set communication protocol to the radio frequency circuit 102 of the RFID tag communication apparatus 100 via the communication control parts 206 and 104 so that an interrogation wave subjected to predetermined modulation is sent to the RFID circuit element To that exists within the communication range via the communication antenna 101 as a tag read signal for reading the data registered in the memory part 155 of all RFID circuit elements To that exist within the communication range without specification of the tag ID.

In step S315, the CPU 203 assesses whether or not a reply signal from the RFID circuit element To within the communication range has been received via the communication control parts 104 and 206 in response to the above-described tag read signal. In a case where the reply signal has not been received, the decision is made that the condition is not satisfied and the flow proceeds to step S320 where the protocol setting is changed to enable wireless communication using the next communication protocol among the plurality of registered communication protocols. Subsequently, the flow returns to the above-described step S310 where information reading is performed using the next communication protocol. Note that, while omitted in FIG. 8, a decision is made in the step S315 so that the flow proceeds to step S320 in a case where reattempts are performed the predetermined set number of times but a retry signal is not received during that period. On the other hand, in a case where a reply signal is received, the decision is made that the condition is satisfied in the step S315 and the flow proceeds to step S325.

In step S325, the CPU 203 in the communication processing part CP stores the tag ID of the RFID circuit element To that had succeeded in communication in association with the communication protocol used at the time of communication success in the storage part CPM.

In step S330, the CPU 203 assesses whether or not information reading was performed using all communication protocols among the plurality of registered communication protocols. In a case where information reading was not performed using all communication protocols, the decision is made that the condition is not satisfied and the flow proceeds to step S320 where the protocol setting is changes to enable wireless communication using the next communication protocol among the plurality of registered communication protocol. On the other hand, in a case where information reading has been performed using all communication protocols, the decision is made that the condition is satisfied and the flow proceeds to step S335.

In step S335, the CPU 203 outputs a control signal to the display part 201, and displays the information registration result of the above-described step S305 to step S330. Then, the routine ends.

Based on the control described with reference to FIG. 6 to FIG. 8 above, the following operation is performed in the RFID tag communication system RS. That is, in the example illustrated in FIG. 2, for example, in a case where information reading is performed with the RFID tags T_{M} and T_{B} and the RFID circuit element To-M and the protocol A, and the RFID circuit element To-B and the protocol B are stored in association in the storage part CPM of the communication processing part CP of the operation terminal 200, the communication protocol is automatically switched to the protocol A to perform information reading with the RFID circuit element To-M of the RFID tag T_{M}, and automatically switched to the protocol B to perform information reading with the RFID circuit element To-B of the RFID tag T_{B}. On the other hand, in a case where at least a part of the above associated information has not been stored in the storage part CPM of the communication processing part CP, the flow automatically proceeds to protocol registration processing, the plurality of communication protocols registered in advance are consecutively switched to perform information transmission and reception with the RFID circuit element To within the communication range and, in a case where information reading succeeds, the read tag ID and the communication protocol are stored in association in the storage part CPM of the communication processing part CP. Thus, in a case where the protocol A and the protocol B are included in the plurality of communication protocols registered in advance, the RFID circuit element To-M and the protocol A, and the RFID circuit element To-B and the protocol B are stored in association in the storage part CPM by protocol registration processing. With this arrangement, in a case where information reading is subsequently performed with the RFID tags T_{M} and T_{B}, the communication protocol is automatically switched to the protocol A to perform information reading with the RFID circuit element To-M of the RFID tag T_{M}, and automatically switched to the protocol B to perform information reading with the RFID circuit element To-B of the RFID tag T_{B}.

Further, in a case where information writing is performed with both the RFID tags T_{M} and T_{B} and the RFID circuit element To-M and the protocol A, and the RFID circuit element To-B and the protocol B are stored in association in the storage part CPM of the communication processing part CP of the operation terminal 200, the communication protocol is automatically switched to the protocol A to perform information writing with the RFID circuit element To-M of the RFID tag T_{M}, and to the protocol B to perform information writing with the RFID circuit element To-B of the RFID tag T_{B}. On the other hand, in a case where at least a part of the above associated information has not been stored in the storage part CPM of the communication processing part CP, the flow automatically proceeds to protocol registration processing, the plurality of communication protocols registered in advance are consecutively switched to perform information transmission and reception with the RFID circuit element To within the communication range and, in a case where information reading succeeds, the read tag ID and the communication protocol are stored in association in the storage part CPM of the communication processing part CP. With the above, information writing is performed with the RFID circuit elements To-M and To-B. Thus, in a case where the protocol A and the protocol B are included among the plurality of communication protocols registered in advance during the above-described protocol registration processing, since the RFID circuit element To-M and the protocol A, and the RFID circuit element To-B and the protocol B are stored in association in the storage part CPM by the protocol registration processing, the communication protocol is automatically switched to the protocol A to perform information writing with the RFID circuit element To-M of the RFID tag T_{M}, and to the protocol B to perform information writing with the RFID circuit element To-B of the RFID tag T_{B} after protocol registration processing.

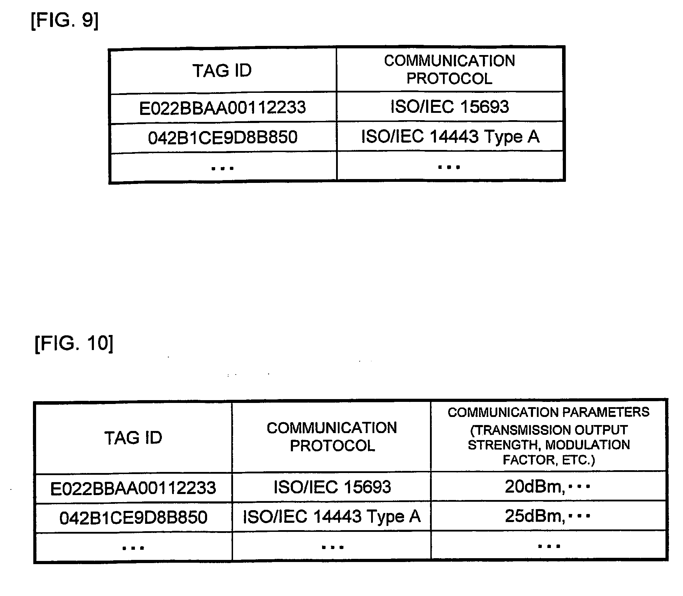

An example of the stored contents of the storage part CPM of the communication processing part CP of the operation terminal 200 after the above-described protocol registration processing is described by using Fig 9.

FIG. 9 corresponds to the example illustrated in the aforementioned FIG. 2, showing ISO/IEC 15693 stored as the protocol A stored in association with the tag ID "E022BBAA00112233" of the RFID circuit element To-M of the RFID tag T_{M}. The figure also shows ISO/IEC 14443 Type A stored as the protocol B in association with the tag ID "042B1CE9D8B850" of the RFID circuit element To-B of the RFID tag T_{B}.

In the RFID tag communication system RS of embodiment 1 of the present invention described above, the plurality of RFID circuit elements To corresponding to the mutually different communication protocols are the communication targets. For example, in the example illustrated in the aforementioned FIG. 2, both the RFID circuit element To-M of the RFID tag T_{M} and the RFID circuit element To-B of the RFID tag T_{B} corresponding to the mutually different communication protocols (the protocol A and the protocol B) are the communication targets. Then, even in a case where both the RFID circuit elements To-M and To-B exist within the communication range of the communication antenna 101, it is possible to perform information reading from these RFID circuit elements To-M and To-B by performing communication by switching (and selectively using) the communication protocol.

That is, the RFID tag communication apparatus 100 acquires the tag ID from the RFID circuit element To-M of the RFID tag T_{M} by performing wireless communication using the communication protocol A via the communication antenna 101 during protocol registration processing. With this arrangement, predetermined storage processing is performed and the tag ID of the RFID circuit element To-M is stored in association with the communication protocol A in the storage part CPM of the communication processing part CP of the operation terminal 200. Similarly, the RFID tag communication apparatus 100 acquires the tag ID from the RFID circuit element To-B of the RFID tag T_{B} by performing wireless communication using the communication protocol B via the communication antenna 101. With this arrangement, predetermined storage processing is performed and the tag ID of the RFID circuit element To-B is stored in association with the communication protocol B in the storage part CPM.

Such association makes it possible to efficiently and reliably perform information transmission and reception by switching the communication protocol to the protocol A when information reading or information writing is performed with the RFID circuit element To of the RFID tag T_{M}, and to the protocol B when information reading or information writing is performed with the RFID circuit element To-B of the RFID tag T_{B}. That is, even in a case where the plurality of types of the RFID circuit elements To corresponding respectively to the plurality of types of communication protocols, it is possible to perform highly reliable information transmission and reception through reliable discriminatory use of the communication protocols that match each of the RFID circuit elements To.

Particularly, in the embodiment, when information writing is performed with the RFID circuit element To, the communication protocol is switched to the communication protocol corresponding to the RFID circuit element To, which is the write target, and write data are sent. For example, in the example illustrated in the aforementioned FIG. 2, the communication protocol is switched to the protocol A and write data are sent to the RFID circuit element To-M when information writing is performed with the RFID circuit element To-M of the RFID tag T_{M}, and the communication protocol is switched to the protocol B and write data are sent to the RFID circuit element To-B when information writing is performed with the RFID circuit element To-B of the RFID tag T_{B}. In this manner, it is possible to perform highly reliable information writing using the optimum communication protocol to the plurality of types of the RFID circuit elements To respectively corresponding to the plurality of types of communication protocols.

Further, particularly in the embodiment, when the operator executes operation input via the operation part 202 of the operation terminal 200, the application processing part AP converts the operation input to a processing instruction signal corresponding to the operation input in accordance with the predetermined application. The communication processing part CP controls the RFID tag communication apparatus 100 based on the converted processing instruction signal. At this time, in the communication processing part CP is contained the storage part CPM, and the tag ID of the RFID circuit element To is stored in association with the communication protocol. For example, in the example illustrated in the aforementioned FIG. 2, the tag ID of the RFID circuit element To-M of the RFID tag T_{M} is stored in association with the protocol A, and the tag ID of the RFID circuit element To-B of the RFID tag T_{B} is stored in association with the protocol B.

Thus, when the processing instruction signal of the contents for performing information reading or information writing with the RFID circuit element To-M is inputted from the application processing part AP, the communication processing part CP controls the RFID tag communication apparatus 100 so that information transmission and reception are automatically performed using the protocol A based on the above-described association in the storage part CPM. Similarly, when the processing instruction signal of the contents for performing information reading or information writing with the RFID circuit element To-B is inputted from the application processing part AP, the communication processing part CP controls the RFID tag communication apparatus 100 so that information transmission and reception are automatically performed using the protocol B.

As a result, the only processing that needs to be performed in the processing within the application processing part AP is unrelated to communication protocol switching: generation of the processing instruction signal that provides instructions for reading or writing with the RFID circuit element To-M when the operator performs an operation for accessing the RFID circuit element To-M, and generation of the processing instruction signal that provides instructions for reading or writing with the RFID circuit element To-B when the operator performs an operation for accessing the RFID circuit element To-B.

Further, particularly in the embodiment, when a processing instruction signal (read command) that provides instructions for information reading from the RFID circuit element To-M or the RFID circuit element To-B is inputted from the application processing part AP, the communication processing part CP refers to the stored contents of the storage part CPM and controls the RFID tag communication apparatus 100 to ensure information reading is performed using the corresponding protocol A or the corresponding protocol B. With this arrangement, the only processing that needs to be performed in the processing within the application processing part AP is processing unrelated to communication protocol switching: generation of the processing instruction signal that provides instructions for reading from the RFID circuit element To-M when the operator inputs an operation for reading information from the RFID circuit element To-M, and generation of the processing instruction signal that provides instructions for reading from the RFID circuit element To-B when the operator inputs an operation for reading information from the RFID circuit element To-B. As a result, in the application processing part AP, it is possible to execute processing unrelated to which protocol is to be used during wireless communication, thereby eliminated the need to take into consideration the compatibility and applicability of each communication protocol in the application used. This makes it possible to improve the ease of application development.

Further, particularly in the embodiment, when a processing instruction signal (write command) that provides instructions for information writing to the RFID circuit element To-M or the RFID circuit element To-B is inputted from the application processing part AP, the communication processing part CP refers to the stored contents of the storage part CPM and controls the RFID tag communication apparatus 100 to ensure information is written using the corresponding protocol A or the corresponding protocol B. With this arrangement, the only processing that needs to be performed in the processing within the application processing part AP is processing unrelated to communication protocol switching: generation of the processing instruction signal that provides instructions for writing to the RFID circuit element To-M when the operator inputs an operation for writing information to the RFID circuit element To-M, and generation of the processing instruction signal that provides instructions for writing to the RFID circuit element To-B when the operator inputs an operation for writing information to the RFID circuit element To-B. As a result, in the application processing part AP, it is possible to execute processing unrelated to which protocol is to be used during wireless communication, thereby eliminated the need to take into consideration the compatibility and applicability of each communication protocol in the application used. This makes it possible to improve the ease of application development.

Further, particularly in the embodiment, in a case where the operator performs an operation for writing information to the RFID circuit element To-M or the RFID circuit element To-B and the protocol A corresponding to the RFID circuit element To-M or the protocol B corresponding to the RFID circuit element To-B is not stored in the storage part CPM, that RFID tag communication apparatus 100 can automatically acquire the tag ID from the RFID circuit element To-M positioned within the communication range by wireless communication using the protocol A, and automatically acquire the tag ID from the RFID circuit element To-B positioned within the communication range by wireless communication using the communication protocol B. Then, based on the information acquisition result, the tag ID of the RFID circuit element To-M is stored in association with the protocol A, and the tag ID of the RFID circuit element To-B is stored in association with the protocol B in the storage part CPM of the operation terminal 200. With this arrangement, it is possible to subsequently switch the communication protocol to the protocol A when information is to be written to the RFID circuit element To-M, and to the protocol B when information is to be written to the RFID circuit element To-B, thereby achieving efficient and reliable information writing.

In this manner, when the operator performs an operation for writing information, even when the communication protocol corresponding to the RFID circuit element To that is the write target is not stored, the RFID tag communication apparatus 100 automatically acquires the tag ID from the RFID circuit element To positioned within the communication range, storing the tag ID of the RFID circuit element To in association with the communication protocol in the storage part CPM of the operation terminal 200 based on the information acquisition result, making it possible for the operator to reliably write information using the optimum communication protocol.

Note that various modifications may be made according to the present embodiment without departing from the scope of the invention, in addition to the above embodiment. Description will be made below regarding such modifications.

### (1-1) When the tag ID is stored in association with a communication parameter

While in the above-described embodiment the communication protocol is associated with the tag ID of the RFID circuit element To, the present invention is not limited thereto, allowing association of the communication protocol as well as a communication parameter (excluding the communication protocol, such as transmission output or the modulation factor) with the tag ID of the RFID circuit element To and use thereof daring information transmission and reception.

The RFID tag communication system RS of this modification is not limited to mutually different communication protocols, allowing a plurality of RFID circuit elements To corresponding to mutually different communication parameters (excluding the communication protocol, such as transmission output or the modulation factor) as the communication target. The configuration of such a system is the same as that illustrated in FIG. 1 to FIG. 5 of the aforementioned embodiment, and description thereof will be omitted.

An example of the stored contents of the storage part CPM of the communication processing part CP of the operation terminal 200 after the above-described protocol registration processing in this modification is described by using Fig 10.

FIG. 10 corresponds to the example illustrated in the aforementioned FIG. 2 and FIG. 9, showing ISO/IEC 15693 as the protocol A and a communication parameter A (transmission output strength of 20dBm, etc.) stored in association with the tag ID "E022BBAA00112233" of the RFID circuit element To-M of the RFID tag T_{M}. The figure also shows ISO/IEC 14443 Type A as the protocol B and a communication parameter B (output transmission strength of 25dBm, etc.) stored in association with the tag ID "042B1CE9D8B850" of the RFID circuit element To-B of the RFID tag T_{B}.

In this modification, the control contents executed by the CPU 203 of the operation terminal 200 are the same as that indicated in the flowcharts of the aforementioned FIG. 6 to FIG. 8 with "protocol" replaced with "protocol and parameter," and descriptions thereof will be omitted.

With the above control, the following operations are performed in the RFID tag communication system RS of this modification. That is, in the example illustrated in FIG. 2, for example, in a case where information reading is performed with the RFID tags T_{M} and T_{B} and the RFID circuit element To-M and the protocol A and the parameter A, and the RFID circuit element To-B and the protocol B and the parameter B are stored in association in the storage part CPM of the communication processing part CP of the operation terminal 200, the communication protocol and the communication parameter are automatically switched to the protocol A and the parameter A, respectively, to perform information reading with the RFID circuit element To-M of the RFID tag T_{M}, and to the protocol B and the parameter B, respectively, to perform information reading with the RFID circuit element To-B of the RFID tag T_{B}. On the other hand, in a case where at least one part of the above associated information has not been stored in the storage part CPM of the communication processing part CP, the flow automatically proceeds to protocol and parameter registration processing where the plurality of communication protocols registered in advance are consecutively switched to perform information transmission and reception with the RFID circuit element To within the communication range and, in a case where information reading succeeds, the read tag ID, communication protocol, and communication parameter are stored in association in the storage part CPM of the communication processing part CP. Thus, in a case where the protocol A and the parameter A, and the protocol B and the parameter B are included in the plurality of communication protocols and communication parameters registered in advance, the RFID circuit element To-M, the protocol A, and the communication parameter A, and the RFID circuit element To-B, the protocol B, and the communication parameter B are stored in association in the storage part CPM by the protocol and parameter registration processing. With this arrangement, in a case where information reading is subsequently performed with the RFID tags T_{M} and T_{B}, it is possible to automatically switch the communication protocol to the protocol A and the communication parameter to the parameter A to read information from the RFID circuit element To-M of the RFID tag T_{M}, and to automatically switch the communication protocol to the protocol B and the communication parameter to the parameter B to read information from the RFID circuit element To-B of the RFID tag T_{B}.

Further, in a case where information writing is performed with both the RFID tags T_{M} and T_{B} and the RFID circuit element To-M, the protocol A, and the parameter A, and the RFID circuit element To-B, the protocol B, and the parameter B are stored in association in the storage part CPM of the communication processing part CP of the operation terminal 200 as illustrated in the aforementioned FIG. 10, the communication protocol and the communication parameter are automatically switched to the protocol A and the parameter A, respectively, to perform information writing with the RFID circuit element To-M of the RFID tag T_{M}, and to the protocol B and the parameter B to perform information writing with the RFID circuit element To-B of the RFID tag T_{B}. On the other hand, in a case where at least one part of the above associated information has not been stored in the storage part CPM of the communication processing part CP, the flow automatically proceeds to protocol and parameter registration processing where the plurality of communication protocols registered in advance are consecutively switched to perform information transmission and reception with the RFID circuit element To within the communication range and, in a case where information reading succeeds, the read tag ID, communication protocol, and communication parameter are stored in association in the storage part CPM of the communication processing part CP. With the above, information writing is performed with the RFID circuit elements To-M and To-B. Thus, in a case where the protocol A and the parameter A, and the protocol B and the parameter B are included in the plurality of communication protocols registered in advance during the above-described protocol and parameter registration processing, after this protocol and parameter registration processing the RFID circuit element To-M, the protocol A, and the communication parameter A, and the RFID circuit element To-B, the protocol B, and the communication parameter B are stored in association in the storage part CPM according to the protocol and parameter processing, making it possible to automatically switch the communication protocol and the communication parameter to the protocol A and the parameter A, respectively, to write information to the RFID circuit element To-M of the RFID tag T_{M}, and to the protocol B and the parameter B, respectively, to write information to the RFID circuit element To-B of the RFID tag T_{B}.

According to the modification described above, even in a case where the plurality of types of the RFID circuit elements To corresponding respectively to the plurality of types of communication parameters is the communication target, it is possible to perform highly reliable information transmission and reception through reliable discriminatory use of the communication parameters that match each of the RFID circuit elements To.

### (1-2) When the RFID tag communication apparatus comprises all functions

While in the above embodiment the RFID tag communication system RS comprises the RFID tag communication apparatus 100 and the operation terminal 200, the RFID tag communication apparatus may be designed to comprise all functions of the RFID tag communication system RS.

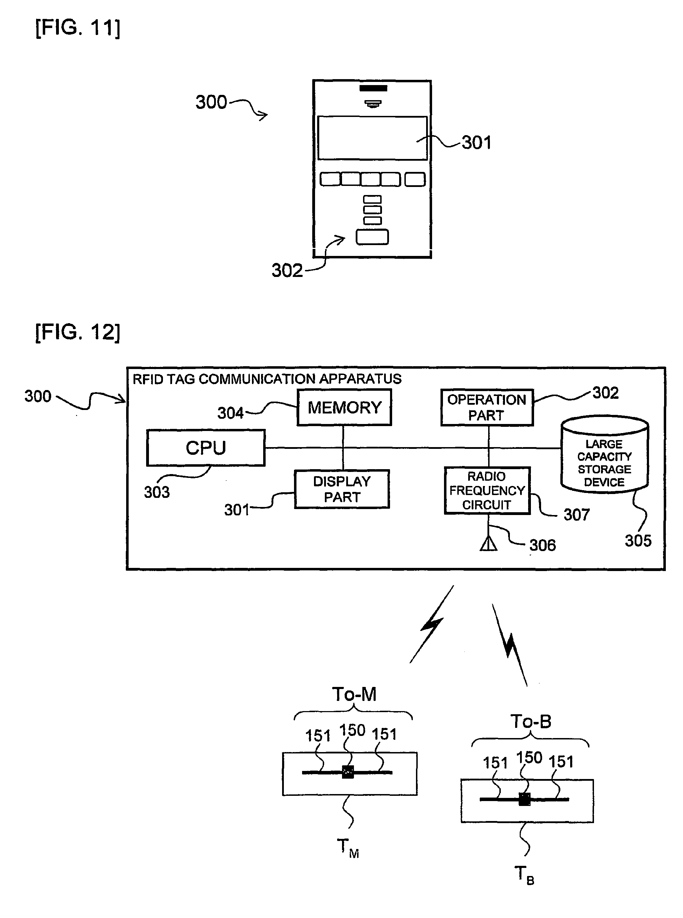

As shown in FIG. 11, the RFID tag communication apparatus 300 of this modification comprises a display part 301 configured to display various information and messages, and an operation part 302 made of a plurality of keys that enable the operator to input instructions and information.

As shown in FIG. 12, the RFID tag communication apparatus 300 comprises the display part 301, the operation part 302, a CPU (central processing unit) 303, a memory 304 comprising RAM or ROM for example, a large-capacity storage device 305 comprising a hard disk device and configured to store various information, a communication antenna 306 that forms a communication range (not shown) that includes a plurality of RFID circuit elements To corresponding to a plurality of communication protocols and performs wireless communication with the plurality of RFID circuit elements To, and a radio frequency circuit 307 configured to access by wireless communication the IC circuit part 150 of the RFID circuit element To via the communication antenna 306 and process signals read from that RFID circuit element To. FIG. 12, similar to the aforementioned FIG. 2, illustrates a case where the RFID tag communication apparatus 300 performs wireless communication with the RFID tags T_{M} and T_{B} (the RFID circuit elements To-M and To-B) corresponding to the two different communication protocols A and B via the communication antenna 306. Note that, in this case, similar to the memory (RAM) 204 of the aforementioned operation terminal 200, a plurality of application programs, communication processing programs and communication driver programs open and start up in the above-described memory (RAM) 204 of the operation terminal 200, and the application processing part AP, communication processing part CP and communication driver CD, which are functionally configured by the startup of these programs, become capable of transmitting and receiving instruction signals and information signals to and from each other. Further, the communication driver CD transmits and receives signals with the RFID tag communication apparatus 100.

All components other than the RFID tag communication apparatus 300 and the control contents executed by the CPU 303 are the same as those of FIG. 3 to FIG. 9 of the aforementioned embodiment, and descriptions thereof will be omitted. This modification can also provide similar advantages to those in the foregoing embodiment.

The following describes embodiment 2 of the present invention with reference to accompanying drawings. This embodiment is utilized for article take-out or check-out control by mutually associating a plurality of RFID circuit elements To respectively provided to a corresponding plurality of target objects (persons and articles, for example), and improves the reliability of information transmission and reception in a case where the RFID tag communication system is used for article management by appropriately executing the above-described associations.

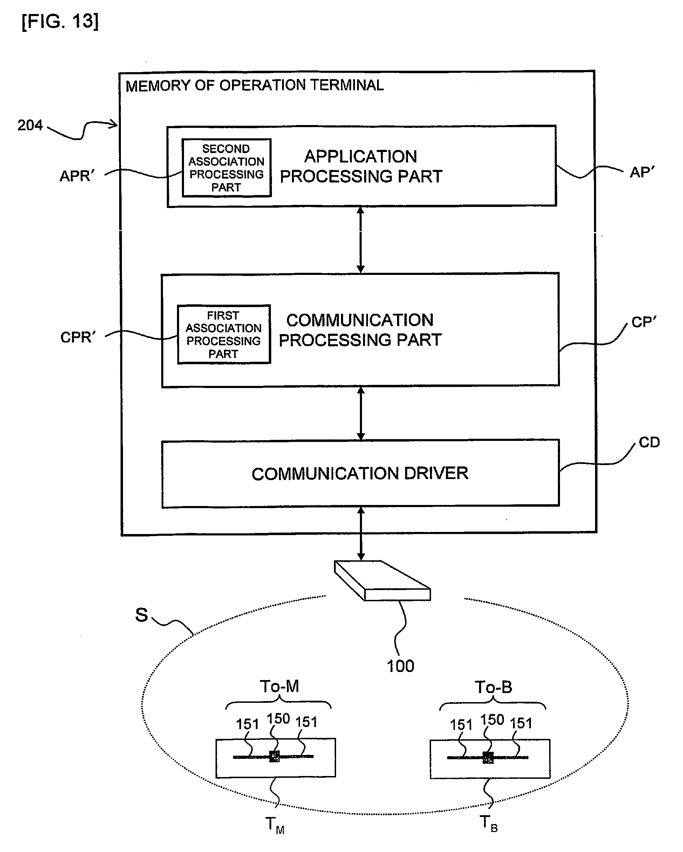

The RFID tag communication system RS of this embodiment comprises the RFID tag communication apparatus 100 and the operation terminal 200 that enables operation of the RFID tag communication apparatus 100. The RFID tag communication apparatus 100 comprises the communication antenna 101 that forms a communication range S (refer to FIG. 13 described later), which includes the plurality of RFID circuit elements To respectively corresponding to a plurality of mutually different communication protocols, to perform wireless communication, and is capable of communicating with the plurality of RFID circuit elements To within the communication range S by selectively switching among the plurality of mutually different communication protocols. The functional configuration of the RFID tag communication apparatus 100 and the operation terminal 200 is the same as that in the aforementioned FIG. 2. Further, the functional configuration of the radio frequency circuit 102 and the RFID circuit element To is the same as that in the aforementioned FIG. 4 and FIG. 5.

An example of the functional configuration of processing control within the operation terminal 200 of the embodiment is described by using Fig 13. Note that the figure here illustrates as an example a case where the RFID tag communication apparatus 100 performs wireless communication with the RFID tags T_{M} and T_{B} corresponding to two different communication protocols positioned within the communication range S, and the RFID tags T_{M} and T_{B} are the same as those illustrated in the aforementioned FIG. 2. That is, the RFID tag T_{M} comprises the RFID circuit element To-M that performs information transmission and reception using the protocol A, and is provided to an object (a nametag or ID card; hereinafter referred to as "first target object") related to a person, for example. Further, the RFID tag T_{B} comprises the RFID circuit element To-B that performs information transmission and reception using the protocol B, and is provided to an article (a document, file, or piece of equipment, for example; hereinafter referred to as "second target object") that is taken out or checked out by the above-described person, for example.

In FIG. 13, a plurality of application programs, communication processing programs, and communication driver programs open and start up in the above-described memory (RAM) 204 of the operation terminal 200, and an application processing part AP', communication processing part CP', and communication driver CD, which are functionally configured by the startup of these programs, become capable of transmitting and receiving instruction signals and information signals to and from each other. Also, the communication driver CD is configured to transmit and receive signals to and from the RFID tag communication apparatus 100 via the interface connection between the above-described communication control parts 206 and 104.

The above-described application processing part AP' performs processing in accordance with predetermined application programs in response to operations input by an operator by means of the above-described operation part 202, generates corresponding processing instruction signals (read commands in this embodiment), and outputs them to the communication processing part CP'. The communication processing part CP' controls the RFID tag communication apparatus 100 based on the processing instruction signal generated by the application processing part AP'.

Further, the communication processing part CP' comprises a first association processing part CPR' configured to associate the tag IDs of the plurality of RFID circuit element To acquired by the RFID tag communication apparatus 100 using the plurality of communication protocols to which the protocol is switched during information reading. That is, in the example illustrated in FIG. 13, as predetermined storage processing, the first association processing part CPR' associates the tag ID of the RFID circuit element To-M acquired by the RFID tag communication apparatus 100 using protocol A and the tag ID of the RFID circuit element To-B acquired by the RFID tag communication apparatus 100 using the protocol B to which the protocol was switched.

Further, the application processing part AP' comprises a second association processing part APR' configured to associate target objects corresponding to the associated tag IDs based on the processing result of the first association processing part CPR' of the communication processing part CP'. That is, in the example illustrated in FIG. 13, as predetermined storage processing, the second association processing part APR' associates the first target object corresponding to the RFID circuit element To-M and the second target object corresponding to the RFID circuit element To-B.

With the above configuration, when the operator executes a read operation input using the operation part 202, the application processing part AP' generates a corresponding processing instruction signal that provides instructions for reading, and the communication processing part CP' controls the RFID tag communication apparatus 100 based on that processing instruction signal. With this arrangement, the communication protocols A and B are used in the receiving portion 143 of the radio frequency circuit 102 of the RFID tag communication apparatus 100 to respectively acquire the tag IDs of the RFID circuit elements To-M and To-B, and the first association processing part CPR' of the communication processing part CP' associates the acquired tag IDs and outputs that information collectively to the application processing part AP'. Then, the second association processing part APR' of the application processing part AP' associates the first target object and the second target object corresponding to the RFID circuit elements To-M and To-B.

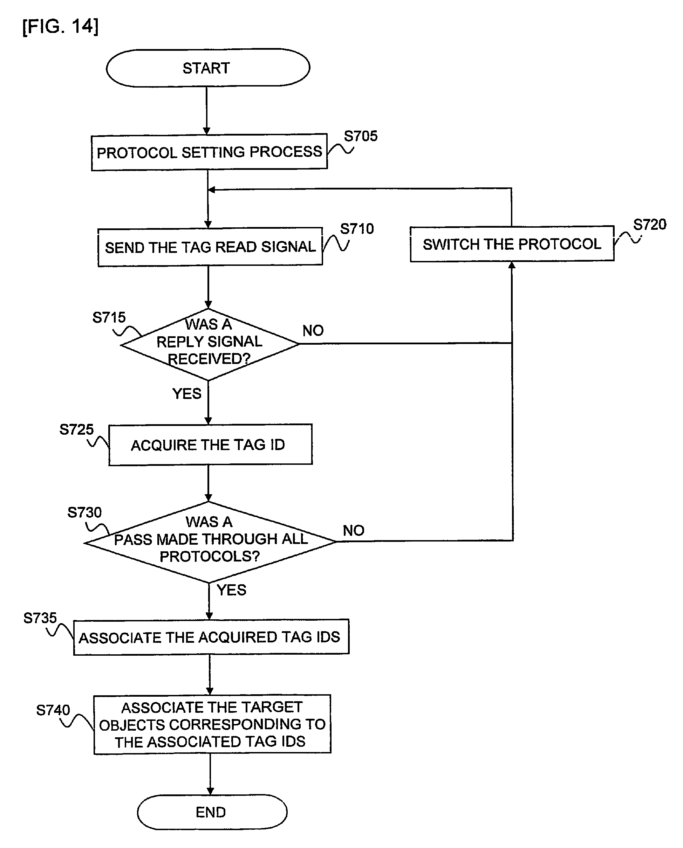

The control procedure executed by the CPU 203 of the operation terminal 200 of this embodiment is described by using Fig 14.

In step S705, the CPU 203 sets the communication protocol in the communication processing part CP'. In this embodiment, a plurality of communication protocols that are to be consecutively switched during information reading are set and registered in advance (in the memory 204 or the large-capacity storage device 205) and, in step S705, the protocol is set to enable wireless communication using the first communication protocol among the plurality of registered communication protocols.

In step S710, the CPU 203 in the communication processing part CP' sends the control signal corresponding to the set communication protocol to the radio frequency circuit 102 of the RFID tag communication apparatus 100 via the communication control parts 206 and 104 so that an interrogation wave subjected to predetermined modulation is sent to the RFID circuit element To that exists within the communication range S via the communication antenna 101 as a tag read signal for reading the data registered in the memory part 155 for all RFID circuit elements To that exist within the communication range S, without specification of the tag ID.

In step S715, the CPU 203 assesses whether or not a reply signal from the RFID circuit element To within the communication range has been received via the communication control parts 104 and 206 in response to the tag read signal. In a case where a reply signal has not been received, the decision is made that the condition is not satisfied and the flow proceeds to step S720 where a control signal is sent to the radio frequency circuit 102 of the RFID tag communication apparatus 100 via the communication control parts 206 and 104 and protocol switching is performed to enable wireless communication using the next communication protocol among the above-described registered plurality of communication protocol in the transmitting portion 142. Subsequently, the flow returns to the above-described step S710 where information reading is performed using the next communication protocol. Note that, while omitted in FIG. 14, a decision is made in the above-described step S715 so that the flow proceeds to step S720 in a case where reattempts are performed the predetermined set number of times but a retry signal is not received during that period. On the other hand, in a case where a reply signal is received, the decision is made in the above-described step S715 that the condition is satisfied and the flow proceeds to step S725.

In step S725, the CPU 203 in the communication processing part CP' acquires the tag ID of the RFID circuit element To that is the read target, based on the received reply signal.

In step S730, the CPU 203 assesses whether or not information reading was performed by making a pass in a predetermined sequence through all communication protocols among the above-described registered plurality of communication protocols. In a case where information reading has not been performed using all communication protocols, the decision is made that the condition is not satisfied and the flow proceeds to step S720 where a control signal is sent to the radio frequency circuit 102 to switch the communication protocol in the transmitting portion 142. On the other hand, in a case where information reading has been performed using all communication protocols, the decision is made that the condition is satisfied and the flow proceeds to step S735. In this manner, during the period a pass is made through all communication protocols by switching the communication protocols in a predetermined sequence, in the above-described step S705 to step S730, a communication range that includes the plurality of RFID circuit elements respectively corresponding to the plurality of mutually different communication protocols is formed and wireless communication is executed.

In step S735, the CPU 203 in the first association processing part CPR' of the communication processing part CP' associates all tag IDs acquired when the pass was made through the plurality of communication protocols by switching the communication protocols in a predetermined sequence in the above-described step S705 to step S730. Subsequently, the associated tag IDs are outputted to the application processing part AP'.

In step S740, the CPU 203 in the second association processing part APR' of the application processing part AP' acquires the target object information respectively associated with these tag IDs and associates the target object information, based on the tag IDs associated by the first association processing part CPR'. Note that the target object information is associated with the tag IDs and registered in the memory 204 or the large-capacity storage device 205 in advance, and the CPU 203 refers to that linkage information (the information associating the target object information and the tag ID) to acquire the target object information. Then, the flowchart ends.

Note that the associated target object information is stored in the large-capacity storage device 205, for example, and subsequently used for take-out or check-out management or the like.

In the RFID tag communication system RS of embodiment 2 of the present invention described above, the plurality of RFID circuit elements To corresponding to the mutually different communication protocols is the communication target. For example, in the example illustrated in the aforementioned FIG. 13, the RFID circuit element To-M performs wireless communication using the protocol A, and the RFID circuit element To-B performs wireless communication using the protocol B. The transmitting portion 142 of the radio frequency circuit 102 of the RFID tag communication apparatus 100 consecutively switches the communication protocol based on the control signal from the CPU 203 of the operation terminal 200 and, using each switched communication protocol, the receiving portion 143 acquires information from the RFID circuit element To via the communication antenna 101. With this arrangement, the tag ID is acquired from the RFID circuit element To-M when the communication protocol of the communication range S of the communication antenna 101 is switched to the protocol A, and the tag ID is acquired from the RFID circuit element To-B when the communication protocol of the same communication range S is switched to the protocol B.

In this manner, the two tag IDs acquired by the RFID tag communication apparatus 100 in the same communication range S are mutually associated by the first association processing part CPR' of the communication processing part CP' of the operation terminal 200. Then, in response to this association of the two tag IDs, the second association processing part APR' of the application processing part AP' associates the first target object corresponding to the RFID circuit element To-M and the second target object corresponding to the RFID circuit element To-B. With this arrangement, it is possible to associate a person and an article using an object (nametag or ID card) associated with a person as the first target object, and an article (book, document, piece of equipment, etc.) transportable by that person as the second target object. This makes it possible to execute article take-out or check-out management, including management of information such as who took out an article and whether or not the article was returned. In this manner, it is possible to appropriately associate persons and articles, enabling highly reliable information transmission and reception even in a case where the RFID tag communication system RS is used for article management or the like.

At this time, the RFID circuit element To-M used by the person and the RFID circuit element To-B used by the article are different types of RFID circuit elements To having mutually different communication protocols. With this arrangement, compared to a case where the RFID circuit elements To are made of the same type of RFID circuit element To, it is possible to perform highly reliable communication having minimal interference and erroneous readings and perform various processing.

Further, particularly in the embodiment, when the operator executes an operation input via the operation part 202 of the operation terminal 200, the application processing part AP' converts the input into a processing instruction signal corresponding to the operation input in accordance with a predetermined application. The communication processing part CP' controls the RFID tag communication apparatus 100 based on that converted processing instruction signal. That is, the application processing part AP' is included as the upper function, and the communication processing part CP' is included as the lower function. Then, in relation to the processing of the tag IDs acquired by the RFID tag communication apparatus 100, the first association processing part CPR' is provided in the communication processing part CP', which is the lower function, and first associates the plurality of tag IDs acquired by the RFID tag communication apparatus 100. Then, the second association processing part APR' is provided in the application processing part AP', which is the upper function, and associates the target objects corresponding to the acquired plurality of tag IDS based on the processing results of the first association processing part CPR'.

In this manner, it is possible to smoothly and quickly perform the processing of both the control of the RFID tag communication apparatus 100 based on the operation from the operation terminal 200 and the processing of the tag ID acquired by the RFID tag communication apparatus 100 by separating the roles into an upper function and a lower function. Further, it is possible to increase the versatility of the upper function of the application processing part AP' by increasing the specialized nature of the lower function of the communication processing part CP', thereby improving the ease of application development.

Further, particularly in this embodiment, the first association processing part CPR' of the communication processing part CP' associates the tag IDs with each other and outputs the association to the application processing part AP'. This collective output of the acquired tag IDs enables the application processing part AP' that receives the tag IDs to readily acknowledge the association between these IDs, making it possible to smoothly and reliably execute subsequent processing (such as association of the target objects with each other).

Further, particularly in this embodiment, the transmitting portion 142 of the radio frequency circuit 102 of the RFID tag communication apparatus 100 switches among the plurality of protocols by making a pass through all protocols, based on the control of the CPU 203 of the operation terminal 200. With this arrangement, in the example illustrated in the aforementioned FIG. 13, for example, in a single communication range S, it is possible to reliably execute communication based on the protocol A and communication based on the protocol B, and reliably acquire the tag ID from the RFID circuit element To-M and the tag ID from the RFID circuit element To-B. Then, in the single communication range S, it is possible to switch among the plurality of protocols A and B by making a pass through all protocols and, during that time, acquire the two tag IDs corresponding to the RFID circuit elements To-M and To-B, thereby acquiring the two tag IDs substantially simultaneously (from the perspective of the operator). Thus, compared to a case where an attempt is made to acquire tag IDs while switching among the plurality of protocols manually, etc., information can be acquired smoothly and efficiently.

Note that the present invention is not limited to the above-described embodiment 2, and various modifications may be made without departing from the scope of the invention. Description will be made below regarding such modifications.

### (2-1) In a case where two passes are made through the protocols and output is performed if the acquisition results match

While in the embodiment 2 the communication processing part CP' makes a pass through all communication protocols by switching among the communication protocols in a predetermined sequence, associates the tag IDs acquired during that period, and then outputs those tag IDs to the application processing part AP', the present invention is not limited thereto. In this modification, the communication processing part CP' makes two passes through the communication protocols and, in a case where the tag IDs acquired during the first pass and the second pass match, associates and outputs these tag IDs to the application processing part AP'.

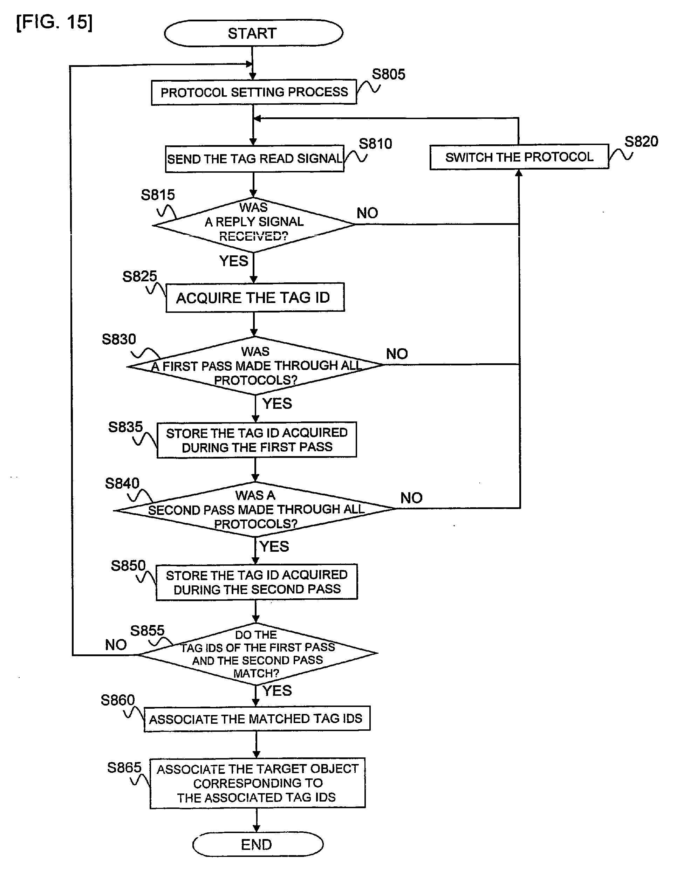

The control procedure executed by the CPU 203 of the operation terminal 200 of this modification is described by using Fig 15.

Step S805 to step S830 are the same as step S705 to step S730 of the aforementioned FIG. 14. That is, the CPU 203 sets the protocol to enable wireless communication using the first communication protocol among the registered plurality of communication protocols, and in the radio frequency circuit 102 the tag read signal is sent to the RFID circuit element To that exists within the communication range S via the communication antenna 101 in accordance with the set communication protocol. In a case where the reply signal from the RFID circuit element To is received in response to the tag read signal, the tag ID of the RFID circuit element To is acquired based on the reply signal. When this tag ID has been acquired by switching among the plurality of communication protocols until a pass was made through all protocols in a predetermined sequence, the decision is made that the condition is satisfied and the flow proceeds to step S835.

In step S835, the CPU 203 stores the tag ID of the first pass, which was acquired during the period in which a first pass was made through the plurality of communication protocols in a predetermined sequence, in the memory 204.

In step S840, the CPU 203 assesses whether or not information reading was performed by making one more pass (that is, a total of two passes) in a predetermined sequence through all communication protocols among the registered plurality of communication protocols. In a case where two passes have not been made, the decision is made that the condition is not satisfied and the flow proceeds to step S820 where a control signal is sent to the radio frequency circuit 102 to switch the communication protocol in the transmitting portion 142. On the other hand, in a case where information reading has been performed by making a second pass through the communication protocols, the decision is made that the condition is satisfied and the flow proceeds to step S850.

In step S850, the CPU 203 stores the tag ID of the second pass, which was acquired during the period in which another pass was made after the first pass through the plurality of communication protocols in a predetermined sequence, in the memory 204.

In step S855, the CPU 203 reads the tag ID of the first pass and the tag ID of the second pass stored in the memory 204, and assesses whether or not the tag IDs mutually match. When the tag IDs do not match, the decision is made that the condition is not satisfied, and the flow returns to step S805. On the other hand, when the tag IDs match, the decision is made that the condition is satisfied, and the flow proceeds to step S860.

In step S860, the CPU 203 in the first association processing part CPR' of the communication processing part CP' associates the tag IDs matched in the step S855 to each other. Subsequently, the associated tag IDs are outputted to the application processing part AP'.

In step S865, the CPU 203 in the second association processing part APR' of the application processing part AP' acquires the target object information respectively associated with these tag IDs based on the tag IDs associated by the first association processing part CPR' and associates these target object information with each other. Then, the flowchart ends.

In the above-described modification, the transmitting portion 142 of the radio frequency circuit 102 of the RFID tag communication apparatus 100 switches among the plurality of communication protocols by making a first pass and then another pass (that is, a total of two passes) through the protocols based on the control of the CPU 203 of the operation terminal 200. With this arrangement, in the example illustrated in the aforementioned FIG. 13, for example, in a single communication range S, it is possible to more reliably execute communication based on the protocol A and communication based on the protocol B, and more reliably acquire the tag ID from the RFID circuit element To-M and the tag ID from the RFID circuit element To-B. Then, when the tag ID acquisition result of the first pass and the tag ID acquisition result of the second pass match, these tag IDs are associated, making it possible to eliminate transitional information reading results and more correctly identify that the RFID circuit element To-M and the RFID circuit element To-B exist within the same communication range S. This enables highly reliable information reading and subsequent association.

### (2-2) When a pass is made through protocols for a predetermined period of time

In this embodiment, when the tag IDs acquired within a predetermined time range match in a case where the communication protocols are switched by making a pass through the protocols in a predetermined sequence and then further repeating this pass a plurality of times, these tag IDs are associated and outputted to the application processing part AP'.

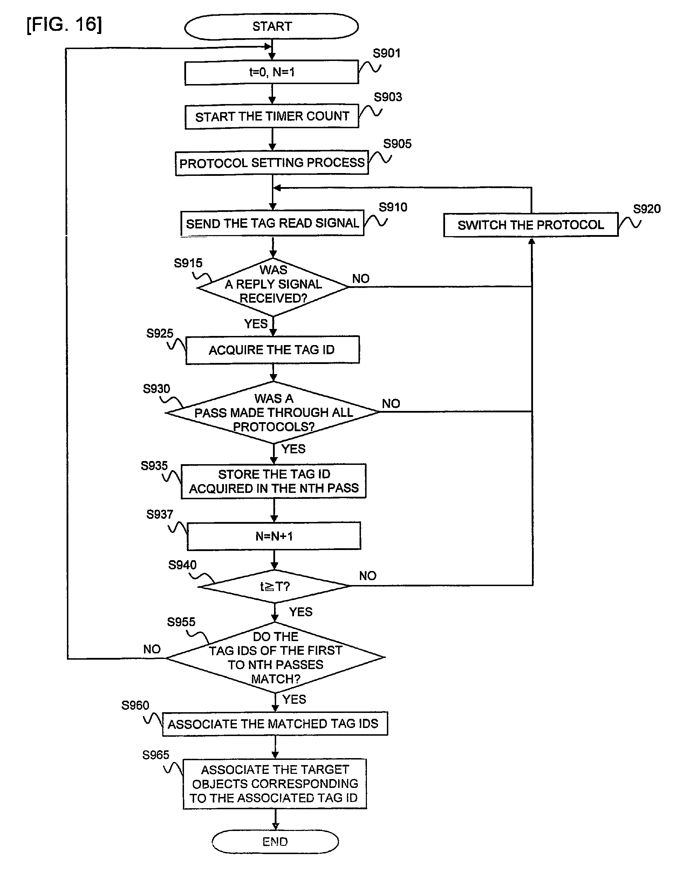

The control procedure executed by the CPU 203 of the operation terminal 200 of this modification is described by using Fig 16.

In step S901, the CPU 203 initializes an elapsed time t from the start of information reading to 0, and a variable N indicating the number of passes made through a plurality of communication protocols in a predetermined sequence during communication protocol switching to 1.

In step S903, the CPU 203 starts a timer (not shown) to start the counting of the elapsed time t since the start of information reading.

Step S905 to step S930 are substantially the same as step S705 to step S730 of the aforementioned FIG. 14. That is, the CPU 203 sets the protocol to enable wireless communication using the first communication protocol among the registered plurality of communication protocols, and in the radio frequency circuit 102 the tag read signal is sent to the RFID circuit element To that exists within the communication range S via the communication antenna 101 in accordance with the set communication protocol. In a case where a reply signal from the RFID circuit element To is received in response to this tag read signal, the tag ID of the RFID circuit element To is acquired based on the reply signal. When this tag ID has been acquired by switching among the plurality of communication protocols until a pass (nth pass) is made through all protocols in a predetermined sequence, the decision is made that the condition is satisfied and the flow proceeds to step S935.

In step S935, the CPU 203 stores the tag ID of the nth pass, which was acquired during the period in which a pass (nth pass) was made through the plurality of communication protocols in a predetermined sequence, in the memory 204.

In step S937, the CPU 203 adds one to the variable N indicating the above-described number of passes and the flow proceeds to step S940.

In step S940, the CPU 203 assesses whether or not the elapsed time t since the start of information reading, for which counting was started in the above-described step S903, is greater than or equal to a predetermined time T. Note that this time T is set to a suitable time in advance, and is stored in the memory 204 or the large-capacity storage device 205. In a case where the elapsed time t is less than the predetermined time T, the decision is made that the condition is not satisfied and the flow returns to step S920 where a pass through the communication protocols is repeated. On the other hand, in a case where the elapsed time t is greater than or equal to the predetermined time T, the condition is satisfied and the flow proceeds to step S955.

In step S955, the CPU 203 assesses whether or not the tag IDs of the 1^{st} to nth passes stored in the memory 204 match each other. When the tag IDs do not match, the decision is made that the condition is not satisfied and the flow returns to step S901. On the other hand, when the tag IDs match, the decision is made that the condition is satisfied and the flow proceeds to step S960.

In step S960, the CPU 203 in the first association processing part CPR' of the communication processing part CP' associates the tag IDs matched in the above-described step S955 to each other. Subsequently, the associated tag IDs are outputted to the application processing part AP'.

In step S965, the CPU 203 in the second association processing part APR' of the application processing part AP' acquires the target object information respectively corresponding with these tag IDs based on the tag IDs associated by the first association processing part CPR', and associates these target object information with each other. Then, the flowchart ends.

Note that while in the above the tag IDs are associated only in a case where the 1^{st} to nth tag IDs match, the tag IDs may be associated in a case where not all 1^{st} to nth tag IDs match, but rather a predetermined amount (set by the operator) matches.

In the above modification, the transmitting portion 142 of the radio frequency circuit 102 of the RFID tag communication apparatus 100 switches among the plurality of protocols by repeatedly making a pass through the protocols within the range of the predetermined time T, based on the control of the CPU 203 of the operation terminal 200. With this arrangement, in the example illustrated in the aforementioned FIG. 13, for example, in a single communication range S, it is possible to more reliably execute communication based on the protocol A and communication based on the protocol B, and more reliably acquire the tag ID from the RFID circuit element To-M and the tag ID from the RFID circuit element To-B. Then, when the tag ID acquisition results continually acquired within the range of that predetermined time T match, these tag IDs are associated, making it possible to eliminate transitional information reading results and more correctly identify that the RFID circuit element To-M and the RFID circuit element To-B exist within the same communication range S. This enables highly reliable information reading and subsequent association.

### (2-3) In a case where information reading is partially repeated a plurality of times during a protocol pass

Depending on the type of RFID circuit element To and the communication protocol used, at times, even when a tag read signal that employs the corresponding protocol is received, a normal response is not always performed, resulting in response at a certain probability rate. Taking into consideration such cases, information reading may be performed a plurality of times (including reattempts of the so-called plurality of times during one information reading) for certain communication protocols among the plurality of protocols to which the protocol is switched. With this arrangement, even in a case where information reading is performed from the RFID circuit element To having such a special response mode, it is possible to reliably acquire the tag ID.

Further, in a case where information reading is thus performed with a certain communication protocol a plurality number of times, information reading may be performed by executing information reading using that communication protocol and executing information reading using a sub-protocol of that communication protocol (using the same communication protocol but different communication parameters). That is, depending on the type of the RFID circuit element To and the communication protocol used, even in a case where a tag read signal that employs the corresponding protocol is received, a response is not always given, resulting in response at a certain probability rate, and, in such a case, settings may be set so that response is possible with the sub-protocol of that communication protocol. Note that here the term "sub-protocol of the communication protocol" refers to the same communication protocol but a different communication parameter (for example, transmission output strength, modulation factor, etc.). Taking into consideration such cases, for a certain communication protocol among the plurality of communication protocols to which the protocol is switched, information reading is executed by performing information reading using that communication protocol and performing information reading using the sub-protocol of that communication protocol, thereby making it possible to acquire tag IDs more reliably, even in a case where information reading is performed from the RFID circuit element To having such a special response mode as described above.

### (2-4) When the communication processing part has tag ID and target object link information

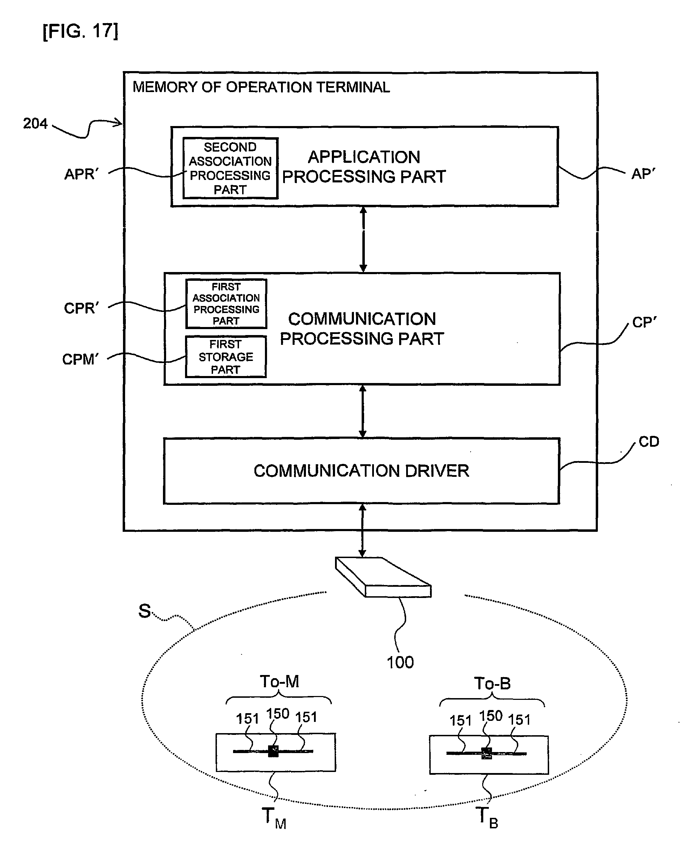

An example of the functional configuration of processing control within the operation terminal 200 of this modification is described by using Fig 17. Note that, in FIG. 17, the same components as those in FIG. 13 are denoted by the same reference numerals, and descriptions thereof will be omitted.

In FIG. 17, the communication processing part CP' is functionally configured by the startup of the above-described communication processing program, and comprises a first storage part CPM' that stores the one-to-one corresponding relationship (table) between each of the plurality of communication protocols and each of the target objects of the plurality of RFID circuit elements To. That is, the first storage part CPM', in the example illustrated in FIG. 17, stores a table associating the protocol A and the first target object to which the corresponding RFID circuit element To is provided, and the protocol B and the second target object to which the corresponding RFID circuit element To-B is provided.

Further, the first association processing part CPR' of the communication processing part CP', in the example illustrated in FIG. 17, associates the tag ID of the RFID circuit element To-M acquired using the protocol A with the first target object, and the tag ID of the RFID circuit element To-B acquired using the protocol B with the second target object, based on the corresponding relationship stored in the first storage part CPM', and outputs these tag IDs collectively to the second association processing part APR' of the application processing part AP'. As a result, the second association processing part APR' of the application processing part AP' associates the first target object and the second target object based on the tag ID associated with the first target object and the tag ID associated with the second target object outputted collectively from the first association processing part CPR'. Note that the configuration of all other components is the same as that in the aforementioned FIG. 13.

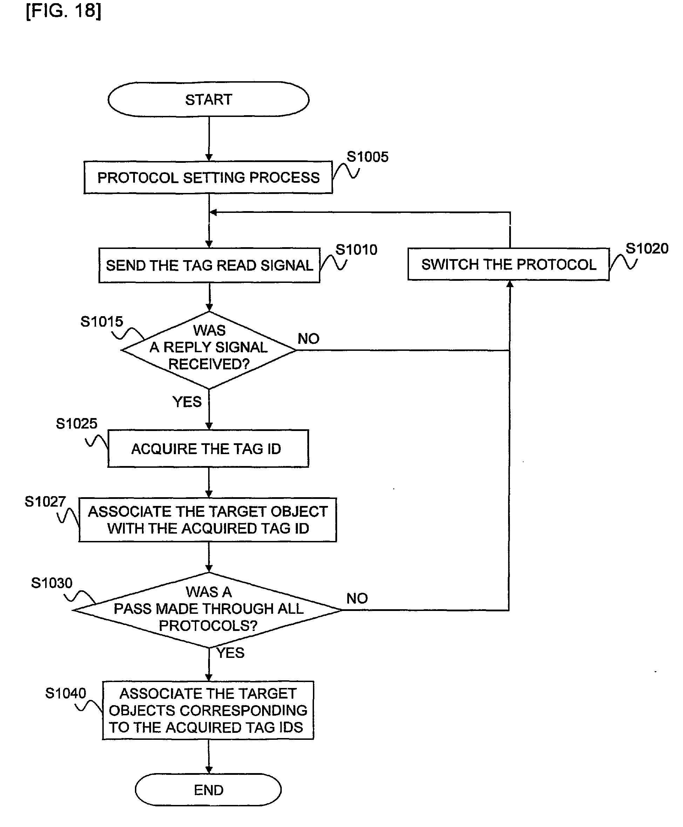

The control procedure executed by the CPU 203 of the operation terminal 200 of this modification is described by using Fig 18.

Step S1005 to step S1025 are the same as step S705 to step S725 of the aforementioned FIG. 14. That is, the CPU 203 sets the protocol to enable wireless communication using the first communication protocol among the registered plurality of communication protocols, and in the radio frequency circuit 102 the tag read signal is sent to the RFID circuit element To that exists within the communication range S via the communication antenna 101 in accordance with the set communication protocol. In a case where a reply signal from the RFID circuit element To is received in response to this tag read signal, the tag ID of the RFID circuit element To is acquired based on the reply signal.

In step S1027, the CPU 203 in the first association processing part CPR' of the communication processing part CP' associates the tag ID of the RFID circuit element To acquired using the communication protocol set in the above-described step S1005 with the corresponding target object based on the corresponding relationship stored in the first storage part CPM'. Subsequently, the associated tag ID and target object are outputted to the application processing part AP'.

In step S1030, the assessment is made as to whether or not information reading has been performed by making a pass through the plurality of communication protocols in a predetermined sequence. In a case where information reading has not been performed using all communication protocols, the decision is made that the condition is not satisfied and the flow proceeds to step S1020 where a control signal is sent to the radio frequency circuit 102 to switch the communication protocol in the transmitting portion 142. On the other hand, in a case where information reading has been performed using all communication protocols, the decision is made that the condition is satisfied and the flow proceeds to step S1040.

In step S1040, the CPU 203 in the second association processing part APR' of the application processing part AP' associates the target object information respectively corresponding to all tag IDs acquired when the plurality of communication protocols were switched by making a pass through the protocols in a predetermined sequence in the above-described step S1005 to step S1030, based on the association between the tag IDs and target objects collectively outputted from the first association processing part CPR' in the above-described step S1027. Then, the flowchart ends.

In the above modification, the first storage part CPM' of the communication processing part CP' of the lower function associates the tag IDs and the target objects in advance, and the application processing part AP' of the upper function associates the plurality of target object information based on the collective quality of the plurality of tag IDs acquired when the plurality of communication protocols were switched by making a pass through the protocols. This makes it possible to smoothly and easily carry out article take-out and check-out management.

### (2-4) When the application processing part has tag ID and target object link information

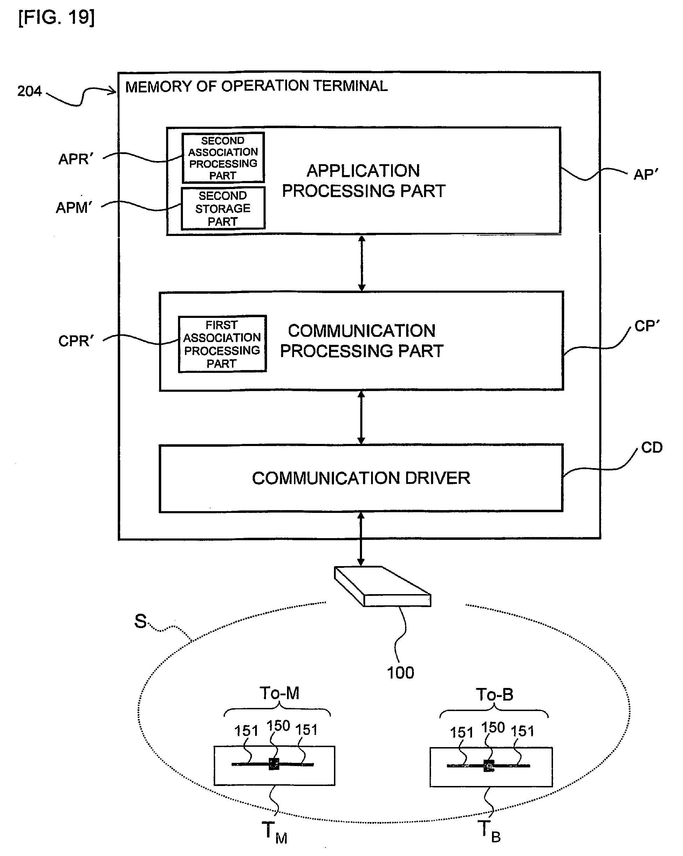

An example of the functional configuration of processing control within the operation terminal 200 of this modification is described by using Fig 19. Note that, in FIG. 19, the same components as those in FIG. 13 are denoted by the same reference numerals, and descriptions thereof will be omitted.

In FIG. 19, the application processing part AP' is functionally configured by the startup of the above-described communication processing program, and comprises a second storage part APM' that stores the one-to-one corresponding relationship (table) of each of the plurality of communication protocols and each of the target objects of the plurality of RFID circuit elements To. That is, the second storage part CPM', in the example illustrated in FIG. 19, stores a table associating the protocol A and the first target object to which the corresponding RFID circuit element To-M is provided, and the protocol B and the second target object to which the corresponding RFID circuit element To-B is provided.

Further, the first association processing part CPR' of the communication processing part CP', in the example illustrated in FIG. 19, associates the tag ID of the RFID circuit element To-M acquired using the protocol A and the tag ID of the RFID tag element To-B acquired using the protocol B, and collectively outputs the information to the second association processing part APR' of the application processing part AP'. As a result, the second association processing part APR' of the application processing part AP' associates the first object corresponding to the protocol A and the second object corresponding to the protocol B based on the tag ID of the RFID circuit element To-M corresponding to the protocol A and the tag ID of the RFID circuit element To-B corresponding to the protocol B collectively outputted from the first association processing part CPR', based on the corresponding relationship stored in the second storage part APM'. Note that the configuration of all other components is the same as that in the aforementioned FIG. 13.

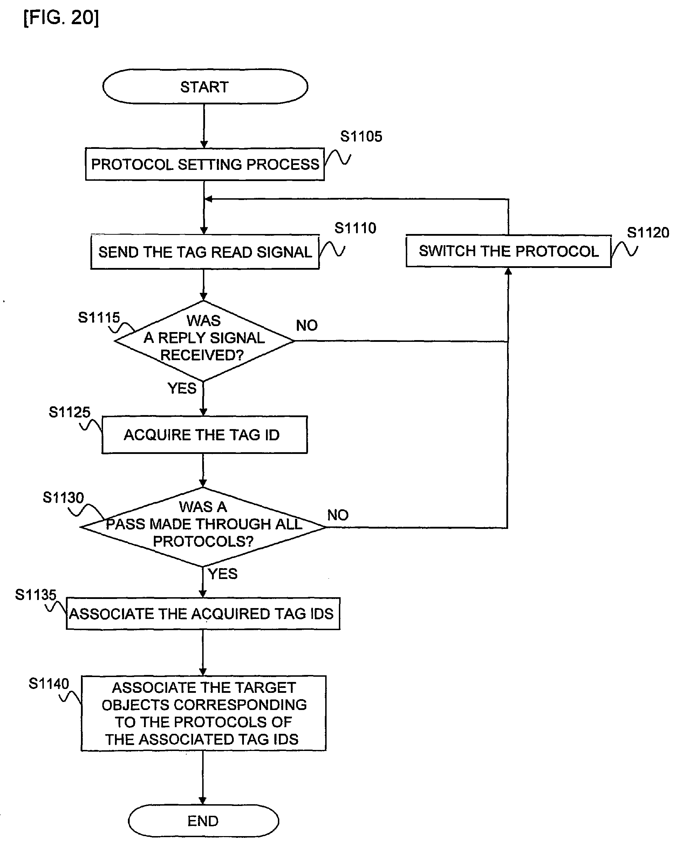

The control procedure executed by the CPU 203 of the operation terminal 200 of this modification is described by using Fig 20.

Step S1105 to step S1135 are the same as step S705 to step S735 of the aforementioned FIG. 14. That is, the CPU 203 sets the protocol to enable wireless communication using the first communication protocol among the registered plurality of communication protocols, and in the radio frequency circuit 102 the tag read signal is sent to the RFID circuit element To that exists within the communication range S via the communication antenna 101 in accordance with the set communication protocol. In a case where a reply signal from the RFID circuit elements To is received in response to this tag read signal, the tag ID of the RFID circuit element To is acquired based on the reply signal. Then, in a case where an assessment is made as to whether or not information reading has been performed using the plurality of communication protocols by making a pass through the protocols in a predetermined sequence and the assessment result indicates such a pass has made, the first association processing part CPR' of the communication processing part CP' associates all tag IDs acquired when the plurality of communication protocols were switched by making a pass through all protocols in a predetermined sequence in the step S705 to step S730. Subsequently, the associated tag IDs are outputted to the application processing part AP'.

In step S1140, the CPU 203 in the second association processing part APR' of the application processing part AP' associates the target objects corresponding to the plurality of communication protocols corresponding to each of the RFID circuit elements To of each tag ID associated by the first association processing part CPR', based on the above-described corresponding relationship stored in the second storage part APM'. Then, the flowchart ends.

In the above modification, in the application processing part AP' of the upper function the plurality of target object information is associated via the communication protocol type to the plurality of tag IDs associated in the communication processing part CP' of the lower function. This makes it possible to smoothly and easily carry out article take-out and check-out management.

### (2-6) When the RFID tag communication apparatus comprises all functions

In this embodiment as well, similar to the aforementioned embodiment 1, the RFID tag communication apparatus may comprise all of the functions of the RFID tag communication system RS. The configuration of the RFID tag communication apparatus in this case is the same as that illustrated in the aforementioned FIG. 11, FIG. 12, FIG. 13, etc. Further, the control contents executed by the CPU 303 of the RFID tag communication apparatus 300 are the same as those in the aforementioned FIG. 14, etc., and descriptions thereof will be omitted. This modification can also provide similar advantages to those of embodiment 2.

Note that the arrows shown in each figure above, such as FIG. 3, FIG. 4 and FIG. 5, denote an example of signal flow, but the signal flow direction is not limited thereto.

Also note thai the present invention is not limited to the procedures shown in the flowcharts of FIG. 6, FIG. 7, FIG. 8, etc., and procedure additions and deletions as well as sequence changes may be made without departing from the scope of the invention.

Other than those previously described, approaches according to each of the above embodiment and modifications may be utilized in combination as appropriate.

## Claims

1. An RFID tag communication apparatus (300) capable of communicating with a plurality of RFID circuit elements (To-B, To-M), each of the RFID circuit elements (To-B, ToM) having a tag antenna (151) that transmits and receives information and an IC circuit part (150) that stores information, said apparatus comprising:
a communication antenna (306) for forming a communication range (S) that includes said RFID circuit elements (To-B, To-M) and performing wireless communication; and
at least one information acquisition means (143) for attempting to acquire tag identification information from said RFID circuit elements (To-B, To-M) positioned within said communication range (S) by selectively using a plurality of communication protocols different from each other;
**characterized by** storage processing means (CPM; APR', CPR') for performing predetermined storage processing in which each acquired tag identification information is associated with the communication protocol used to acquire said tag identification information with

2. The RFID tag communication apparatus (300) according to claim 1, **characterized in that**:
said plurality of communication protocols include a first communication protocol and a second communication protocol that are different from each other;
said communication antenna (306) forms a first communication range that includes a first RFID circuit element (To-M) and a second RFID circuit element (To-B) to perform wireless communication, said first RFID circuit element (To-M) having a first tag antenna (151) that transmits and receives information using said first communication protocol and a first IC circuit part (150) that stores information, said second RFID circuit element (To-B) having a second tag antenna (151) that transmits and receives information using said second communication protocol and a second IC circuit part (150) that stores information;
said at least one information acquisition means (143) includes first information acquisition means (143) and second information acquisition means (143), said first information acquisition means (143) acquiring a first tag identification information from said first RFID circuit element (To-M) positioned within said first communication range by wireless communication using said first communication protocol; said second information acquisition means (143) acquiring a second tag identification information from said second RFID circuit element (To-B) positioned within said first communication range by wireless communication using said second communication protocol; and
said storage processing means (CPM) has first storage means (CPM) for storing said first tag identification information of said first RFID circuit element (To-M) in association with said first communication protocol, and said second tag identification information of said second RFID circuit element (To-B) in association with said second communication protocol.

3. The RFID tag communication apparatus according to claim 2 capable of performing communication by selectively switching among a plurality of communication parameters that includes a first communication parameter and a second communication parameter **characterized in that**:
said first information acquisition means (143) acquires said first tag identification information from said first RFID circuit element (To-M) positioned within said first communication range by wireless communication using said first communication parameter;
said second information acquisition means (143) acquires said second tag identification information from said second RFID circuit element (To-B) positioned within said first communication range by wireless communication using said second communication parameter; and
said first storage means (CPM) stores said first tag identification information of said first RFID circuit element (To-M) in association with said first communication parameter, and stores said second tag identification information of said second RFID circuit element (To-B) in association with said second communication parameter, based on information acquisition results of said first information acquisition means (143) and said second information acquisition means (143).

4. The RFID tag communication apparatus (300) according to claim 2, further comprising:
write data generating means (S217) for generating a first write data for writing to said first IC circuit part (150) of said first RFID circuit element (To-M), or a second write data for writing to said second IC circuit part (150) of said second RFID circuit element (To-B); and
write data transmitting means (142) for sending said first write data to said first RFID circuit element (To-M) by wireless communication using at least said first communication protocol among said first communication protocol and said first communication parameter, or said second write data to said second RFID circuit element (To-B) by wireless communication using at least said second communication protocol among said second communication protocol and said second communication parameter, via said communication antenna (306) and based on storage contents of said first storage means (CPM).

5. The RFID tag communication apparatus (300) according to claim 4, further comprising:
first operation means (302) for enabling operation input by an operator;
a first application processing part (AP) for performing processing an operation input of said operator by means of said first operation means (302) in accordance with a predetermined application program and for generating a processing instruction signal corresponding to said operation input; and
a first communication processing part (CP) having said first storage means (CPM) and for controlling said first information acquisition means (143) and second information acquisition means (143) or controlling said write data transmitting means (142), based on the processing instruction signal generated by said first application processing part (AP).

6. The RFID tag communication apparatus (300) according to claim 1, **characterized in that**:
said communication range (S) simultaneously includes said plurality of RFID circuit elements (To-B, To-M) respectively corresponding to said plurality of communication protocols different from each other, to perform wireless communication, and
said RFID tag communication apparatus (300) further comprises protocol switching means (142) for switching one by one among said plurality of communication protocols;
said at least one information acquisition means (143) includes third information acquisition means (143) for performing acquisition processing for attempting to acquire information by wireless communication from said RFID circuit elements (To-B, To-M) positioned within said communication range (S), using each communication protocol switched one by one by said protocol switching means (142); and
said storage processing means (APR', CPR') has first association processing means (CPR') and second association processing means (APR'), said first association processing means (CPR') being for associating a third tag identification information of a third RFID circuit element (To-M) with a fourth tag identification information of a fourth RFID circuit element (To-B), said third tag identification information being acquired from said third information acquisition means (143) with using a third communication protocol switched to by said protocol switching means (142), said fourth tag identification information being acquired from said third information acquisition means (143) with using a fourth communication protocol switched to by said protocol switching means (142); said second association processing means (APR') being for associating a first target object corresponding to said third RFID circuit element (To-M) with a second target object corresponding to said fourth RFID circuit element (To-B), based on a processing result from said first association processing means (CPR').

7. The RFID tag communication apparatus (300) according to claim 6, **characterized in that**:
said first association processing means (CPR') associates said third tag identification information with said fourth tag identification information acquired by said third information acquisition means (143) when said protocol switching means (142) switches among said plurality of communication protocols by making a round through said plurality of protocols in a predetermined sequence, or wherein
said first association processing means (CPR') associates said third tag identification information with said fourth tag identification information acquired during both a first pass and a second pass in a case where an acquisition result of said third information acquisition means (143) of said first pass when said protocol switching means (142) switched among said plurality of communication protocols by making a pass through said plurality of communication protocols in a predetermined sequence matches an acquisition result of said third information acquisition means (143) of said second pass when said protocol switching means (142) subsequently switched among said plurality of communication protocols by making a pass through said plurality of communication protocols in a predetermined sequence, or wherein
said first association processing means (CPR') associates said third tag identification information with said fourth tag identification information acquired in a case where said protocol switching means (142) switches among said plurality of communication protocols by making a pass through said plurality of protocols in a predetermined sequence and repeating the pass, and the acquisition results of said third information acquisition means (143) within a range of a predetermined time (T) match with each other.

8. The RFID tag communication apparatus according to claim 7, **characterized in that**:
said third information acquisition means (143) performs said information acquisition processing a plurality of times with respect to one communication protocol included in said plurality of communication protocols, and performs said information acquisition processing once with using all other communication protocols other than said one communication protocol, when said protocol switching means (142) switches among said plurality of communication protocols by making a pass through said plurality of communication protocols in said predetermined sequence.

9. The RFID tag communication apparatus (300) according to claim 8, **characterized in that**:
said protocol switching means (142) switches to a sub-protocol of said one communication protocol in the next sequence of said one communication protocol when switching among said plurality of communication protocols by making a pass through said plurality of communication protocols in said predetermined sequence; and
said third information acquisition means performs said information acquisition processing once by using said one communication protocol and performs said information acquisition processing once by using said sub-protocol in response to said switching by said protocol switching means (142).

10. An RFID tag communication system (RS) capable of communicating with a plurality of RFID circuit elements (To-B, To-M), each of the RFID circuit elements (To-B, ToM) having a tag antenna (151) that transmits and receives information and an IC circuit part (150) that stores information, the system having an RFID tag communication apparatus (100) and an operation terminal (200) for enabling operation of said RFID tag communication apparatus (100), wherein:
said RFID tag communication apparatus (100) comprises:
a communication antenna (101) for forming a communication range (S) that includes said RFID circuit elements (To-B, To-M) and performing wireless communication; and
at least one information acquisition means (143) for attempting to acquire tag identification information from said RFID circuit elements (To-B, To-M) positioned within said communication range (S) by selectively using a plurality of communication protocols different from each other;
**characterized in that**:
said operation terminal (200) has storage processing means (CPM; APM' , APR' , CPM' , CPR') for performing predetermined storage processing in which each acquired tag identification information is associated with the communication protocol used to acquire said tag identification information

11. The RFID tag communication system (RS) according to claim 10, **characterized in that**:
said plurality of communication protocols include a first communication protocol and a second communication protocol that are different from each other;
said communication antenna (101) forms a first communication range that includes a first RFID circuit element (To-M) and a second RFID circuit element (To-B) to perform wireless communication, said first RFID circuit element (To-M) having a first tag antenna (151) that transmits and receives information using said first communication protocol and a first IC circuit part (150) that stores information; said second RFID circuit element (To-B) having a second tag antenna (151) that transmits and receives information using said second communication protocol and a second IC circuit part (150) that stores information;
said at least one information acquisition means (143) includes first information acquisition means (143) and second information acquisition means (143), said first information acquisition means (143) acquiring a first tag identification information from said first RFID circuit element (To-M) positioned within said first communication range by wireless communication using said first communication protocol; said second information acquisition means (143) acquiring a second tag identification information from said second RFID circuit element (To-B) positioned within said first communication range by wireless communication using said second communication protocol; and
said storage processing means (CPM) has second storage means (CPM) for storing said first tag identification information of said first RFID circuit element (To-M) in association with said first communication protocol, and said second tag identification information of said second RFID circuit element (To-B) in association with said second communication protocol.

12. The RFID tag communication system (RS) according to claim 11, **characterized in that**:
said RFID tag communication apparatus (100) is capable of performing communication by selectively switching among a plurality of communication parameters that includes a first communication parameter and a second communication parameter
said first information acquisition means (143) of said RFID tag communication apparatus (100) acquires said first tag identification information from said first RFID circuit element (To-M) positioned within said first communication range by wireless communication using said first communication parameter;
said second information acquisition means (143) of said RFID tag communication apparatus (100) acquires said second tag identification information from said second RFID circuit element (To-M) positioned within said first communication range by wireless communication using said second communication parameter; and
said second storage means (CPM) of said operation terminal (200) stores said first tag identification information of said first RFID circuit element (To-M) in association with said first communication parameter, and stores said second tag identification information of said second RFID circuit element (To-B) in association with said second communication parameter, based on information acquisition results of said first information acquisition means (143) and said second information acquisition means (143), or wherein
said operation terminal (200) further includes write data generating means (S217) for generating a first write data for writing to said first IC circuit part (150) of said first RFID circuit element (To-M), or a second write data for writing to said second IC circuit part (150) of said second RFID circuit element (To-B); and
said RFID tag communication apparatus (100) further includes write data transmitting means (142) for sending said first write data to said first RFID circuit element (To-M) by wireless communication using at least said first communication protocol among said first communication protocol and said first communication parameter, or said second write data to said second RFID circuit element (To-B) by wireless communication using at least said second communication protocol among said second communication protocol and said second communication parameter, via said communication antenna (101) and based on storage contents of said second storage means (CPM) of said operation terminal (200).

13. The RFID tag communication system (RS) according to claim 12, **characterized in that**:
said operation terminal (200) has:
second operation means (202) for enabling operation input by an operator;
a second application processing part (AP) for performing processing an operation input of said operator by means of said second operation means (202) in accordance with a predetermined application program and for generating a processing instruction signal corresponding to said operation input; and
a second communication processing part (CP) having said second storage means (CPM) and for controlling said RFID tag communication apparatus (100) based on the processing instruction signal generated by said second application processing part (AP).

14. The RFID tag communication system (RS) according to claim 10, **characterized in that**:
said communication range (S) simultaneously includes said plurality of RFID circuit elements (To-B, To-M) respectively corresponding to said plurality of communication protocols different from each other, to perform wireless communication, and
said RFID tag communication apparatus (100) further comprises protocol switching means (142) for switching one by one among said plurality of communication protocols;
said at least one information acquisition means (143) includes third information acquisition means (143) for performing acquisition processing for attempting to acquire information by wireless communication from said RFID circuit elements (To-B, To-M) positioned within said communication range (S), using each communication protocol switched one by one by said protocol switching means (142); and
said storage processing means (APM', APR', CPM', CPR') has third association processing means (CPR') and fourth association processing means (APR'), said third association processing means (CPR') being for associating a third tag identification information of a third RFID circuit element (To-M) with a fourth tag identification information of a fourth RFID circuit element (To-B), said third tag identification information being acquired from said third information acquisition means (143) with using a third communication protocol switched to by said protocol switching means (142), said fourth tag identification information being acquired from said third information acquisition means (143) with using a fourth communication protocol switched to by said protocol switching means (142); said fourth association processing means (APR') being for associating a first target object corresponding to said third RFID circuit element (To-M) with a second target object corresponding to said fourth RFID circuit element (To-B), based on a processing result from said third association processing means (CPR').

15. The RFID tag communication system (RS) according to claim 14, **characterized in that**:
said operation terminal (200) has:
third operation means (202) for enabling operation input by an operator,
a third application processing part (AP') for performing processing an operation input of said operator by means of said third operation means (202) in accordance with a predetermined application program and for generating a processing instruction signal corresponding to said operation input, and
a third communication processing part (CP') for controlling said RFID tag communication apparatus (100) based on a processing instruction signal generated by said third application processing part (AP'); and
said fourth association processing means (APR') is provided in said third application processing part (AP'); and
said third association processing means (CPR') is provided in said third communication processing part (CP').

16. The RFID tag communication system (RS) according to claim 15, **characterized in that**:
said third application processing part (AP') outputs said processing instruction signal for providing instructions for information reading in accordance with the operation input of said operator by means of said third operation means (202);
said third information acquisition means (143) acquires said third tag identification information using said third communication protocol, and acquires said fourth tag identification information using said fourth communication protocol, based on the control performed by said third communication processing part (CP') in accordance with said processing instruction signal for providing instructions for said information reading;
said third association processing means (CPR') of said third communication processing part (CP') associates said third tag identification information with said fourth tag identification information acquired by said third information acquisition means (143), and collectively outputs the third tag identification information and the fourth tag identification information to said third application processing part (AP'); and
said fourth association processing means (APR') of said third application processing part (AP') associates said first target object with said second target object based on said third tag identification information and said fourth tag identification information associated with each other.

## Patentansprüche

1. RFID-Etikettenkommunikationsgerät (300), das mit vielen RFID-Schaltungselementen (To-B, To-M) kommunizieren kann, wobei die RFID-Schaltungselemente (To-B, To-M) jeweils eine Etikettenantenne (151), die Informationen überträgt und aufnimmt, und einen IC-Schaltungsteil (150) haben, der Informationen speichert, wobei das Gerät Folgendes aufweist:
eine Kommunikationsantenne (306) zum Bilden eines Kommunikationsbereiches (S), der die RFID-Schaltungselemente (To-B, To-M) enthält, und zum Durchführen einer drahtlosen Kommunikation; und
zumindest eine Informationsakquisitionseinrichtung (143), um zu versuchen, Etikettenidentifikationsinformationen von den RFID-Schaltungselementen (To-B, To-N) zu akquirieren, die innerhalb des Verbindungsbereiches (S) positioniert sind, indem wahlweise eine Vielzahl von Kommunikationsprotokollen verwendet wird, die sich voneinander unterscheiden;
**gekennzeichnet durch** eine
Speicherverarbeitungseinrichtung (CPM; APR', CPR') zum Durchführen einer vorbestimmten Speicherverarbeitung, bei der die akquirierten Etikettenidentifikationsinformationen jeweils mit dem Kommunikationsprotokoll verknüpft werden, das zum Akquirieren der Etikettenidentifikationsinformationen verwendet wird.

2. RFID-Etikettenkommunikationsgerät (300) gemäß Anspruch 1, **dadurch gekennzeichnet, dass**:
die Vielzahl Kommunikationsprotokolle ein erstes Kommunikationsprotokoll und ein zweites Kommunikationsprotokoll enthält, die sich voneinander unterscheiden;
wobei die Kommunikationsantenne (306) einen ersten Kommunikationsbereich bildet, der ein erstes RFID-Schaltungselement (To-M) und ein zweites RFID-Schaltungselement (To-B) enthält, um eine drahtlose Kommunikation durchzuführen, wobei das erste RFID-Schaltungselement (To-M) eine erste Etikettenantenne (151), die Informationen unter Verwendung des ersten Kommunikationsprotokolls überträgt und aufnimmt, und einen ersten IC-Schaltungsteil (150) hat, der Informationen speichert, wobei das zweite RFID-Schaltungselement (To-B) eine zweite Etikettenantenne (151), die Informationen unter Verwendung des zweiten Kommunikationsprotokolls überträgt und aufnimmt, und einen zweiten IC-Schaltungsteil (150) hat, der Informationen speichert;
wobei die zumindest eine Informationsakquisitionseinrichtung (143) eine erste Informationsakquisitionseinrichtung (143) und eine zweite Informationsakquisitionseinrichtung (143) enthält, wobei die erste Informationsakquisitionseinrichtung (143) erste Etikettenidentifikationsinformationen von dem ersten RFID-Schaltungselement (To-M) akquiriert, das innerhalb des ersten Kommunikationsbereiches positioniert ist, und zwar durch eine drahtlose Kommunikation unter Verwendung des ersten Kommunikationsprotokolls; wobei die zweite Informationsakquisitionseinrichtung (143) zweite Etikettenidentifikationsinformationen von dem zweiten RFID-Schaltungselement (To-B) akquiriert, das innerhalb des ersten Kommunikationsbereiches positioniert ist, und zwar durch eine drahtlose Kommunikation unter Verwendung des zweiten Kommunikationsprotokolls; und
wobei die Speicherverarbeitungseinrichtung (CPM) eine erste Speichereinrichtung (CPM) zum Speichern der ersten Etikettenidentifikationsinformationen des ersten RFID-Schaltungselements (To-M) verknüpft mit dem ersten Kommunikationsprotokoll, und der zweiten Etikettenidentifikationsinformationen des zweiten RFID-Schaltungselements (To-B) verknüpft mit dem zweiten Kommunikationsprotokoll hat.

3. RFID-Etikettenkommunikationsgerät gemäß Anspruch 2, das eine Kommunikation durch wahlweises Schalten zwischen Kommunikationsparametern durchführen kann, die einen ersten Kommunikationsparameter und einen zweiten Kommunikationsparameter enthalten, **dadurch gekennzeichnet, dass**:
die erste Informationsakquisitionseinrichtung (143) die ersten Etikettenidentifikationsinformationen von dem ersten RFID-Schaltungselement (To-M) akquiriert, das innerhalb des ersten Kommunikationsbereiches positioniert ist, und zwar durch eine drahtlose Kommunikation unter Verwendung des ersten Kommunikationsparameters;
wobei die zweite Informationsakquisitionseinrichtung (143) die zweiten Etikettenidentifikationsinformationen von dem zweiten RFID-Schaltungselement (To-B) akquiriert, das innerhalb des ersten Kommunikationsbereiches positioniert ist, und zwar durch eine drahtlose Kommunikation unter Verwendung des zweiten Kommunikationsparameters; und
wobei die erste Speichereinrichtung (CPM) die ersten Etikettenidentifikationsinformationen des ersten RFID-Schaltungselements (To-M) verknüpft mit dem ersten Kommunikationsparameter speichert, und die zweiten Etikettenidentifikationsinformationen des zweiten RFID-Schaltungselements (To-B) verknüpft mit dem zweiten Kommunikationsparameter speichert, und zwar auf der Grundlage von Informationsakquisitionsergebnissen der ersten Informationsakquisitionseinrichtung (143) und der zweiten Informationsakquisitionseinrichtung (143).

4. RFID-Etikettenkommunikationsgerät (300) gemäß Anspruch 2, des Weiteren mit:
einer Schreibdatenerzeugungseinrichtung (S217) zum Erzeugen von ersten Schreibdaten zum Schreiben in den ersten IC-Schaltungsteil (150) des ersten RFID-Schaltungselements (To-M), oder von zweiten Schreibdaten zum Schreiben in den zweiten IC-Schaltungsteil (150) des zweiten RFID-Schaltungselements (To-B); und
einer Schreibdatenübertragungseinrichtung (142) zum Senden der ersten Schreibdaten zu dem ersten RFID-Schaltungselement (To-M) durch eine drahtlose Kommunikation zumindest unter Verwendung des ersten Kommunikationsprotokolls von dem ersten Kommunikationsprotokoll und dem ersten Kommunikationsparameter oder der zweiten Schreibdaten zu dem zweiten RFID-Schaltungselement (To-B) durch eine drahtlose Kommunikation zumindest unter Verwendung des zweiten Kommunikationsprotokolls von dem zweiten Kommunikationsprotokoll und dem zweiten Kommunikationsparameter über die Kommunikationsantenne (306) und auf der Grundlage von Speicherinhalten der ersten Speichereinrichtung (CPM).

5. RFID-Etikettenkommunikationsgerät (300) gemäß Anspruch 4, des Weiteren mit:
einer ersten Betriebseinrichtung (302) zum Ermöglichen einer Betriebseingabe durch einen Benutzer;
einem ersten Applikationsverarbeitungsteil (AP) zum Durchführen einer Verarbeitung einer Betriebseingabe des Benutzers mittels der ersten Betriebseinrichtung (302) gemäß einem vorbestimmten Applikationsprogramm und zum Erzeugen eines Verarbeitungsbefehlssignals entsprechend der Betriebseingabe; und
einem ersten Kommunikationsverarbeitungsteil (CP), der die erste Speichereinrichtung (CPM) hat und zum Steuern der ersten Informationsakquisitionseinrichtung (143) und der zweiten Informationsakquisitionseinrichtung (143) oder zum Steuern der Schreibdatenübertragungseinrichtung (142) auf der Grundlage des Verarbeitungsbefehlssignals, das durch den ersten Applikationsverarbeitungsteil (AP) erzeugt wird.

6. RFID-Etikettenkommunikationsgerät (300) gemäß Anspruch 1, **dadurch gekennzeichnet, dass**:
der Kommunikationsbereich (S) gleichzeitig die vielen RFID-Schaltungselemente (To-B, To-M) enthält, die jeweils den vielen Kommunikationsprotokollen entsprechen, die sich voneinander unterscheiden, um eine drahtlose Kommunikation durchzuführen, und
wobei das RFID-Etikettenkommunikationsgerät (300) des Weiteren eine Protokollschalteinrichtung (142) aufweist, um von den vielen Kommunikationsprotokollen von einem zum anderen zu schalten;
wobei die zumindest eine Informationsakquisitionseinrichtung (143) eine dritte Informationsakquisitionseinrichtung (143) zum Durchführen einer Akquisitionsverarbeitung aufweist, um zu versuchen, Informationen durch eine drahtlose Kommunikation von den RFID-Schaltungselementen (To-B, To-M) zu akquirieren, die innerhalb des Kommunikationsbereiches (S) positioniert sind, und zwar unter Verwendung von den Kommunikationsprotokollen, die jeweils von einem zum anderen durch die Protokollschalteinrichtung (142) geschaltet werden; und
wobei die Speicherverarbeitungseinrichtung (APR', CPR') eine erste Verknüpfungsverarbeitungseinrichtung (CPR') und eine zweite Verknüpfungsverarbeitungseinrichtung (APR') hat, wobei die erste Verknüpfungsverarbeitungseinrichtung (CPR') dritte Etikettenidentifikationsinformationen eines dritten RFID-Schaltungselements (To-M) mit vierten Etikettenidentifikationsinformationen eines vierten RFID-Schaltungselements (To-B) verknüpft, wobei die dritten Etikettenidentifikationsinformationen von der dritten Informationsakquisitionseinrichtung (143) unter Verwendung eines dritten Kommunikationsprotokolls akquiriert werden, das durch die Protokollschalteinrichtung (142) geschaltet wird, wobei die vierten Etikettenidentifikationsinformationen von der dritten Informationsakquisitionseinrichtung (143) unter Verwendung eines vierten Kommunikationsprotokolls akquiriert werden, das durch die Protokollschalteinrichtung (142) geschaltet wird; wobei die zweite Verknüpfungsverarbeitungseinrichtung (APR') ein erstes Zielobjekt entsprechend dem dritten RFID-Schaltungselement (To-M) mit einem zweiten Zielobjekt entsprechend dem vierten RFID-Schaltungselement (To-B) auf der Grundlage eines Verarbeitungsergebnisses von der ersten Verknüpfungsverarbeitungseinrichtung (CPR') verknüpft.

7. RFID-Etikettenkommunikationsgerät (300) gemäß Anspruch 6, **dadurch gekennzeichnet, dass**:
die erste Verknüpfungsverarbeitungseinrichtung (CPR') die dritten Etikettenidentifikationsinformationen mit den vierten Etikettenidentifikationsinformationen verknüpft, die durch die dritte Informationsakquisitionseinrichtung (143) akquiriert werden, wenn die Protokollschalteinrichtung (142) zwischen den vielen Kommunikationsprotokollen schaltet, indem eine Runde durch die vielen Protokolle in einer vorbestimmten Sequenz durchgeführt wird, oder wobei
die erste Verknüpfungsverarbeitungseinrichtung (CPR') die dritten Etikettenidentifikationsinformationen mit den vierten Etikettenidentifikationsinformationen verknüpft, die sowohl während einem ersten Durchlauf als auch einem zweiten Durchlauf in jenem Fall akquiriert werden, bei dem ein Akquisitionsergebnis der dritten Informationsakquisitionseinrichtung (143) des ersten Durchlaufes, wenn die Protokollschalteinrichtung (142) zwischen den vielen Kommunikationsprotokollen schaltet, indem ein Durchlauf durch die vielen Kommunikationsprotokolle in einer vorbestimmten Sequenz durchgeführt wird, zu einem Akquisitionsergebnis der dritten Informationsakquisitionseinrichtung (143) des zweiten Durchlaufes passt, wenn die Protokollschalteinrichtung (142) nachfolgend zwischen den vielen Kommunikationsprotokollen geschaltet hat, indem ein Durchlauf durch die vielen Kommunikationsprotokolle in einer vorbestimmten Sequenz durchgeführt wird, oder
wobei die erste Verknüpfungsverarbeitungseinrichtung (CPR') die dritten Etikettenidentifikationsinformationen mit den vierten Etikettenidentifikationsinformationen verknüpft, die in einem Fall akquiriert werden, bei dem die Protokollschalteinrichtung (142) zwischen den vielen Kommunikationsprotokollen schaltet, indem ein Durchlauf durch die vielen Protokolle in einer vorbestimmten Sequenz durchgeführt wird und der Durchlauf wiederholt wird, und die Akquisitionsergebnisse der dritten Informationsakquisitionseinrichtung (143) innerhalb eines Bereiches einer vorbestimmten Zeit (T) zueinander passen.

8. RFID-Etikettenkommunikationsgerät gemäß Anspruch 7, **dadurch gekennzeichnet, dass**:
die dritte Informationsakquisitionseinrichtung (143) die Informationsakquisitionsverarbeitung hinsichtlich eines Kommunikationsprotokolls mehrfach durchführt, das bei den vielen Kommunikationsprotokollen enthalten ist, und die Informationsakquisitionsverarbeitung einmal unter Verwendung von allen anderen Kommunikationsprotokollen außer dem einen Kommunikationsprotokoll durchführt, wenn die Protokollschalteinrichtung (142) zwischen den vielen Kommunikationsprotokollen schaltet, indem ein Durchlauf durch die vielen Kommunikationsprotokolle in der vorbestimmten Sequenz durchgeführt wird.

9. RFID-Etikettenkommunikationsgerät (300) gemäß Anspruch 8, **dadurch gekennzeichnet, dass**:
die Protokollschalteinrichtung (142) zu einem Nebenprotokoll des einen Kommunikationsprotokolls in der nächsten Sequenz des einen Kommunikationsprotokolls schaltet, wenn zwischen den vielen Kommunikationsprotokollen geschaltet wird, indem ein Durchlauf durch die vielen Kommunikationsprotokolle in der vorbestimmten Sequenz durchgeführt wird; und
wobei die dritte Informationsakquisitionseinrichtung die Informationsakquisitionsverarbeitung einmal unter Verwendung des einen Kommunikationsprotokolls durchführt und die Informationsakquisitionsverarbeitung einmal unter Verwendung des Nebenprotokolls als Reaktion auf das Schalten durch die Protokollschalteinrichtung (142) durchführt.

10. RFID-Etikettenkommunikationssystem (RS), das mit vielen RFID-Schaltungselementen (To-B, To-M) kommunizieren kann, wobei die RFID-Schaltungselemente (To-B, To-M) jeweils eine Etikettenantenne (151), die Informationen überträgt und aufnimmt, und einen IC-Schaltungsteil (150) haben, der Informationen speichert, wobei das System ein RFID-Etikettenkommunikationsgerät (100) und einen Betriebsterminal (200) zum Ermöglichen eines Betriebs des RFID-Etikettenkommunikationsgerätes (100) hat, wobei:
das RFID-Etikettenkommunikationsgerät (100) folgendes aufweist:
eine Kommunikationsantenne (101) zum Bilden eines Kommunikationsbereiches (S), der die RFID-Schaltungselemente (To-B, To-M) enthält, und zum Durchführen einer drahtlosen Kommunikation; und
zumindest eine Informationsakquisitionseinrichtung (143), um zu versuchen, Etikettenidentifikationsinformationen von den RFID-Schaltungselementen (To-B, To-M) zu akquirieren, die innerhalb des Kommunikationsbereiches (S) positioniert sind, indem wahlweise eine Vielzahl von Kommunikationsprotokollen verwendet wird, die sich voneinander unterscheiden;
**dadurch gekennzeichnet, dass**:
der Betriebsterminal (200) eine Speicherverarbeitungseinrichtung (CPM; APM', APR', CPM', CPR') zum Durchführen einer vorbestimmten Speicherverarbeitung hat, bei der die akquirierten Etikettenidentifikationsinformationen jeweils mit dem Kommunikationsprotokoll verknüpft werden, das zum Akquirieren der Etikettenidentifikationsinformationen verwendet wird.

11. RFID-Etikettenkommunikationssystem (RS) gemäß Anspruch 10, **dadurch gekennzeichnet, dass**:
die vielen Kommunikationsprotokolle ein erstes Kommunikationsprotokoll und ein zweites Kommunikationsprotokoll enthalten, die sich voneinander unterscheiden;
die Kommunikationsantenne (101) einen ersten Kommunikationsbereich bildet, der ein erstes RFID-Schaltungselement (To-M) und ein zweites RFID-Schaltungselement (To-B) enthält, um eine drahtlose Kommunikation durchzuführen, wobei das erste RFID-Schaltungselement (To-M) eine erste Etikettenantenne (151), die unter Verwendung des ersten Kommunikationsprotokolls Informationen überträgt und aufnimmt, und einen ersten IC-Schaltungsteil (150) hat, der Informationen speichert; wobei das zweite RFID-Schaltungselement (To-B) eine zweite Etikettenantenne (151), die unter Verwendung des zweiten Kommunikationsprotokolls Informationen überträgt und aufnimmt, und einen zweiten IC-Schaltungsteil (150) hat, der Informationen speichert;
wobei die zumindest eine Informationsakquisitionseinrichtung (143) eine erste Informationsakquisitionseinrichtung (143) und eine zweite Informationsakquisitionseinrichtung (143) aufweist, wobei die erste Informationsakquisitionseinrichtung (143) erste Etikettenidentifikationsinformationen von dem ersten RFID-Schaltungselement (To-M) akquiriert, das innerhalb des ersten Kommunikationsbereiches positioniert ist, und zwar durch eine drahtlose Kommunikation unter Verwendung des ersten Kommunikationsprotokolls; wobei die zweite Informationsakquisitionseinrichtung (143) zweite Etikettenidentifikationsinformationen von dem zweiten RFID-Schaltungselement (To-B) akquiriert, das innerhalb des ersten Kommunikationsbereiches positioniert ist, und zwar durch eine drahtlose Kommunikation unter Verwendung des zweiten Kommunikationsprotokolls; und
die Speicherverarbeitungseinrichtung (CPM) eine zweite Speichereinrichtung (CPM) hat, um die ersten Etikettenidentifikationsinformationen des ersten RFID-Schaltungselements (To-M) verknüpft mit dem ersten Kommunikationsprotokoll und die zweiten Etikettenidentifikationsinformationen des zweiten RFID-Schaltungselements (To-B) verknüpft mit dem zweiten Kommunikationsprotokoll zu speichern.

12. RFID-Etikettenkommunikationssystem (RS) gemäß Anspruch 11, **dadurch gekennzeichnet, dass**:
das RFID-Etikettenkommunikationsgerät (100) eine Verbindung durch wahlweises Schalten zwischen vielen Kommunikationsparametern durchführen kann, die einen ersten Kommunikationsparameter und einen zweiten Kommunikationsparameter enthalten,
wobei die erste Informationsakquisitionseinrichtung (143) des RFID-Etikettenkommunikationsgerätes (100) die ersten Etikettenidentifikationsinformationen von dem ersten RFID-Schaltungselement (To-M) akquiriert, das innerhalb des ersten Kommunikationsbereiches positioniert ist, und zwar durch eine drahtlose Kommunikation unter Verwendung des ersten Kommunikationsparameters;
wobei die zweite Informationsakquisitionseinrichtung (143) des RFID-Etikettenkommunikationsgerätes (100) die zweiten Etikettenidentifikationsinformationen von dem zweiten RFID-Schaltungselement (To-M) akquiriert, das innerhalb des ersten Kommunikationsbereiches positioniert ist, und zwar durch eine drahtlose Kommunikation unter Verwendung des zweiten Kommunikationsparameters; und
wobei die zweite Speichereinrichtung (CPM) des Betriebsterminals (200) die ersten Etikettenidentifikationsinformationen des ersten RFID-Schaltungselements (To-M) verknüpft mit dem ersten Kommunikationsparameter speichert und die zweiten Etikettenidentifikationsinformationen des zweiten RFID-Schaltungselements (To-B) verknüpft mit dem zweiten Kommunikationsparameter speichert, und zwar auf der Grundlage von Informationsakquisitionsergebnissen der ersten Informationsakquisitionseinrichtung (143) und der zweiten Informationsakquisitionseinrichtung (143), oder wobei
der Betriebsterminal (200) des Weiteren eine Schreibdatenerzeugungseinrichtung (S217) zum Erzeugen von ersten Schreibdaten zum Schreiben in den ersten IC-Schaltungsteil (150) des ersten RFID-Schaltungselements (To-M) oder von zweiten Schreibdaten zum Schreiben in den zweiten IC-Schaltungsteil (150) des zweiten RFID-Schaltungselements (To-B) aufweist; und
wobei das RFID-Etikettenkommunikationsgerät (100) des Weiteren eine S'chreibdatenübertragungseinrichtung (142) zum Senden der ersten Schreibdaten zu dem ersten RFID-Schaltungselement (To-M) durch eine drahtlose Kommunikation zumindest unter Verwendung des ersten Kommunikationsprotokolls von dem ersten Kommunikationsprotokoll und dem ersten Kommunikationsparameter, oder der zweiten Schreibdaten zu dem zweiten RFID-Schaltungselement (To-B) durch eine drahtlose Kommunikation zumindest unter Verwendung des zweiten Kommunikationsprotokolls von dem zweiten Kommunikationsprotokoll und dem zweiten Kommunikationsparameter über die Kommunikationsantenne (101) und auf der Grundlage von Speicherinhalten der zweiten Speichereinrichtung (CPM) des Betriebsterminals (200) aufweist.

13. RFID-Etikettenkommunikationssystem (RS) gemäß Anspruch 12, **dadurch gekennzeichnet, dass**:
der Betriebsterminal (200) folgendes aufweist:
eine zweite Betriebseinrichtung (202) zum Ermöglichen einer Betriebseingabe durch einen Benutzer;
einen zweiten Applikationsverarbeitungsteil (AP) zum Durchführen einer Verarbeitung einer Betriebseingabe des Benutzers mittels der zweiten Betriebseinrichtung (202) gemäß einem vorbestimmten Applikationsprogramm und zum Erzeugen eines Verarbeitungsbefehlssignals entsprechend der Betriebseingabe; und
einen zweiten Kommunikationsverarbeitungsteil (CP), der die zweite Speichereinrichtung (CPM) hat und zum Steuern des RFID-Etikettenkommunikationsgerätes (100) auf der Grundlage des Verarbeitungsbefehlssignals, das durch den zweiten Applikationsverarbeitungsteil (AP) erzeugt wird.

14. RFID-Etikettenkommunikationssystem (RS) gemäß Anspruch 10, **dadurch gekennzeichnet, dass**:
der Kommunikationsbereich (S) gleichzeitig die vielen RFID-Schaltungselemente (To-B, To-M) enthält, die jeweils den vielen Kommunikationsprotokollen entsprechen, die sich voneinander unterscheiden, um eine drahtlose Kommunikation durchzuführen, und
wobei das RFID-Etikettenkommunikationsgerät (100) des Weiteren eine Protokollschalteinrichtung (142) aufweist, um von den vielen Kommunikationsprotokollen von einem zum anderen zu schalten;
wobei die zumindest eine Informationsakquisitionseinrichtung (143) eine dritte Informationsakquisitionseinrichtung (143) zum Durchführen einer Akquisitionsverarbeitung aufweist, um zu versuchen, Informationen durch eine drahtlose Kommunikation von den RFID-Schaltungselementen (To-B, To-M) zu akquirieren, die innerhalb des Kommunikationsbereiches (S) positioniert sind, und zwar unter Verwendung von den Kommunikationsprotokollen, die jeweils von einem zu dem anderen durch die Protokollschalteinrichtung (142) geschaltet werden; und
wobei die Speicherverarbeitungseinrichtung (APM', APR', CPM', CPR') eine dritte Verknüpfungsverarbeitungseinrichtung (CPR') und eine vierte Verknüpfungsverarbeitungseinrichtung (APR') aufweist, wobei die dritte Verknüpfungsverarbeitungseinrichtung (CPR') dritte Etikettenidentifikationsinformationen eines dritten RFID-Schaltungselements (To-M) mit vierten Etikettenidentifikationsinformationen eines vierten RFID-Schaltungselements (To-B) verknüpft, wobei die dritten Etikettenidentifikationsinformationen von der dritten Informationsakquisitionseinrichtung (143) unter Verwendung eines dritten Kommunikationsprotokolls akquiriert werden, das durch die Protokollschalteinrichtung (142) geschaltet wird, wobei die vierten Etikettenidentifikationsinformationen von der dritten Informationsäkquisitionseinrichtung (143) unter Verwendung eines vierten Kommunikationsprotokolls akquiriert werden, das durch die Protokollschalteinrichtung (142) geschaltet wird; wobei die vierte Verknüpfungsverarbeitungseinrichtung (APR') ein erstes Zielobjekt entsprechend dem dritten RFID-Schaltungselement (To-M) mit einem zweiten Zielobjekt entsprechend dem vierten RFID-Schaltungselement (To-B) auf der Grundlage eines Verarbeitungsergebnisses von der dritten Verknüpfungsverarbeitungseinrichtung (CPR') verknüpft.

15. RFID-Etikettenkommunikationssystem (RS) gemäß Anspruch 14, **dadurch gekennzeichnet, dass**:
der Betriebsterminal (200) folgendes aufweist:
eine dritte Betriebseinrichtung (202) zum Ermöglichen einer Betriebseingabe durch einen Benutzer,
einen dritten Applikationsverarbeitungsteil (AP') zum Durchführen einer Verarbeitung einer Betriebseingabe des Benutzers mittels der dritten Betriebseinrichtung (202) gemäß einem vorbestimmten Applikationsprogramm und zum Erzeugen eines Verarbeitungsbefehlssignals entsprechend der Betriebseingabe, und
einen dritten Kommunikationsverarbeitungsteil (CP') zum Steuern des RFID-Etikettenkommunikationsgerätes (100) auf der Grundlage eines Verarbeitungsbefehlssignals, das durch den dritten Applikationsverarbeitungsteil (AP') erzeugt wird; und
wobei die vierte Verknüpfungsverarbeitungseinrichtung (APR') bei dem dritten Applikationsverarbeitungsteil (AP') vorgesehen ist; und
wobei die dritte Verknüpfungsverarbeitungseinrichtung (CPR') bei dem dritten Kommunikationsverarbeitungsteil (CP') vorgesehen ist.

16. RFID-Etikettenkommunikationssystem (RS) gemäß Anspruch 15, **dadurch gekennzeichnet, dass**:
der dritte Applikationsverarbeitungsteil (AP') das Verarbeitungsbefehlssignal abgibt, um Befehle zum Lesen von Informationen gemäß der Betriebseingabe des Benutzers mittels der dritten Betriebseinrichtung (202) bereitzustellen;
wobei die dritte Informationsakquisitionseinrichtung (143) die dritten Etikettenidentifikationsinformationen unter Verwendung des dritten Kommunikationsprotokolls akquiriert und die vierten Etikettenidentifikationsinformationen unter Verwendung des vierten Kommunikationsprotokolls akquiriert, und zwar auf der Grundlage der Steuerung, die durch den dritten Kommunikationsverarbeitungsteil (CP') gemäß dem Verarbeitungsbefehlssignal zum Bereitstellen von Befehlen für das Lesen von Informationen durchgeführt wird;
wobei die dritte Verknüpfungsverarbeitungseinrichtung (CPR') des dritten Kommunikationsverarbeitungsteils (CP') die dritten Etikettenidentifikationsinformationen mit den vierten Etikettenidentifikationsinformationen verknüpft, die durch die dritte Informationsakquisitionseinrichtung (143) akquiriert werden, und die dritten Etikettenidentifikationsinformationen und die vierten Etikettenidentifikationsinformationen kollektiv zu dem dritten Applikationsverarbeitungsteil (AP') abgibt; und
wobei die vierte Verknüpfungsverarbeitungseinrichtung (APR') des dritten Applikationsverarbeitungsteils (AP') das erste Zielobjekt mit dem zweiten Zielobjekt auf der Grundlage der dritten Etikettenidentifikationsinformationen und den vierten Etikettenidentifikationsinformationen verknüpft, die miteinander verknüpft sind.

## Revendications

1. Dispositif de communication avec des étiquettes RFID (300) qui est apte à communiquer avec une pluralité d'éléments de circuit RFID (To-B, To-M), chacun des éléments de circuit RFID (To-B, To-M) ayant une antenne d'étiquette (151) qui transmet et reçoit des informations et une section de circuit intégré (150) qui stocke des informations, ledit dispositif comprenant :
une antenne de communication (306) pour former une plage de communication (S) qui comprend lesdits éléments de circuit RFID (To-B, To-M) et pour exécuter une communication sans fil ; et
au moins un moyen d'acquisition d'informations (143) pour tenter d'acquérir des informations d'identification d'étiquette à partir desdits éléments de circuit RFID (To-B, To-M) positionnés à l'intérieur de ladite plage de communication (S) par le biais d'une utilisation sélective d'une pluralité de protocoles de communication qui sont différents les uns des autres ;
**caractérisé par** des moyens d'exécution d'une opération de stockage (CPM ; APR', CPR') pour exécuter une opération de stockage prédéterminée au cours de laquelle chaque information d'identification d'étiquette acquise est associée au protocole de communication utilisé pour acquérir ladite information d'identification d'étiquette.

2. Dispositif de communication avec des étiquettes RFID (300) selon la revendication 1, **caractérisé en ce que** :
ladite pluralité de protocoles de communication comprend un premier protocole de communication et un deuxième protocole de communication qui sont différents l'un de l'autre ;
ladite antenne de communication (306) forme une première plage de communication qui comprend un premier élément de circuit RFID (To-M) et un deuxième élément de circuit RFID (To-B) pour exécuter une communication sans fil, ledit premier élément de circuit RFID (To-M) ayant une première antenne d'étiquette (151) qui transmet et reçoit des informations au moyen dudit premier protocole de communication et une première section de circuit intégré (150) qui stocke des informations, ledit deuxième élément de circuit RFID (To-B) ayant une deuxième antenne d'étiquette (151) qui transmet et reçoit des informations au moyen dudit deuxième protocole de communication et une deuxième section de circuit intégré (150) qui stocke des informations ;
ledit au moins un moyen d'acquisition d'informations (143) comprend un premier moyen d'acquisition d'informations (143) et un deuxième moyen d'acquisition d'informations (143), ledit premier moyen d'acquisition d'informations (143) acquérant des premières informations d'identification d'étiquette à partir dudit premier élément de circuit RFID (To-M) positionné à l'intérieur de ladite première plage de communication par le biais d'une communication sans fil au moyen dudit premier protocole de communication ; ledit deuxième moyen d'acquisition d'informations (143) acquérant des deuxièmes informations d'identification d'étiquette à partir dudit deuxième élément de circuit RFID (To-B) positionné à l'intérieur de ladite première plage de communication par le biais d'une communication sans fil au moyen dudit deuxième protocole de communication ; et
lesdits moyens d'exécution d'une opération de stockage (CPM) comprennent des premiers moyens de stockage (CPM) pour stocker lesdites premières informations d'identification d'étiquette dudit premier élément de circuit RFID (To-M) en association avec ledit premier protocole de communication, et lesdites deuxièmes informations d'identification d'étiquette dudit deuxième élément de circuit RFID (To-B) en association avec ledit deuxième protocole de communication.

3. Dispositif de communication avec des étiquettes RFID selon la revendication 2, apte à exécuter une communication par le biais d'une commutation sélective parmi une pluralité de paramètres de communication qui comprennent un premier paramètre de communication et un deuxième paramètre de communication, **caractérisé en ce que** :
ledit premier moyen d'acquisition d'informations (143) acquiert lesdites premières informations d'identification d'étiquette à partir dudit premier élément de circuit RFID (To-M) positionné à l'intérieur de ladite première plage de communication par le biais d'une communication sans fil au moyen dudit premier paramètre de communication ;
ledit deuxième moyen d'acquisition d'informations (143) acquiert lesdites deuxièmes informations d'identification d'étiquette à partir dudit deuxième élément de circuit RFID (To-B) positionné à l'intérieur de ladite première plage de communication par le biais d'une communication sans fil au moyen dudit deuxième paramètre de communication ; et
ledit premiers moyens de stockage (CPM) stockent lesdites premières informations d'identification d'étiquette dudit premier élément de circuit RFID (To-M) en association avec ledit premier paramètre de communication, et stockent lesdites deuxièmes informations d'identification d'étiquette dudit deuxième élément de circuit RFID (To-B) en association avec ledit deuxième paramètre de communication, sur la base des résultats d'acquisition d'informations dudit premier moyen d'acquisition d'informations (143) et dudit deuxième moyen d'acquisition d'informations (143).

4. Dispositif de communication avec des étiquettes RFID (300) selon la revendication 2, comprenant par ailleurs :
des moyens de génération de données en écriture (S217) pour générer des premières données en écriture pour écrire dans ladite première section de circuit intégré (150) dudit premier élément de circuit RFID (To-M), ou pour générer des deuxièmes données en écriture pour écrire dans ladite deuxième section de circuit intégré (150) dudit deuxième élément de circuit RFID (To-B) ; et
des moyens de transmission de données en écriture (142) pour envoyer lesdites premières données en écriture au dit premier élément de circuit RFID (To-M) par le biais d'une communication sans fil au moyen d'au moins ledit premier protocole de communication parmi ledit premier protocole de communication et ledit premier paramètre de communication, ou pour envoyer lesdites deuxièmes données en écriture au dit deuxième élément de circuit RFID (To-B) par le biais d'une communication sans fil au moyen d'au moins ledit deuxième protocole de communication parmi ledit deuxième protocole de communication et ledit deuxième paramètre de communication, au moyen de ladite antenne de communication (306) et sur la base du contenu de stockage desdits premiers moyens de stockage (CPM).

5. Dispositif de communication avec des étiquettes RFID (300) selon la revendication 4, comprenant par ailleurs :
des premiers moyens de commande (302) pour permettre l'exécution d'une entrée de commande par un opérateur ;
une première section de traitement d'application (AP) pour exécuter un traitement d'une entrée de commande dudit opérateur au moyen desdits premiers moyens de commande (302) en accord avec un programme d'application prédéterminé et pour générer un signal de commande de traitement correspondant à ladite entrée de commande ; et
une première section de traitement de communication (CP) comprenant lesdits premiers moyens de stockage (CPM) et servant à commander ledit premier moyen d'acquisition d'informations (143) et ledit deuxième moyen d'acquisition d'informations (143) ou servant à commander lesdits moyens de transmission de données en écriture (142), sur la base du signal de commande de traitement généré par ladite première section de traitement d'application (AP).

6. Dispositif de communication avec des étiquettes RFID (300) selon la revendication 1, **caractérisé en ce que** :
ladite plage de communication (S) comprend en même temps ladite pluralité d'éléments de circuit RFID (To-B, To-M) correspondant respectivement à ladite pluralité de protocoles de communication qui sont différents les uns des autres, pour exécuter une communication sans fil, et
ledit dispositif de communication avec des étiquettes RFID (300) comprend par ailleurs des moyens de commutation de protocole (142) pour exécuter une commutation un à un parmi ladite pluralité de protocoles de communication ;
ledit au moins un moyen d'acquisition d'informations (143) comprend un troisième moyen d'acquisition d'informations (143) pour exécuter une opération d'acquisition pour tenter d'acquérir des informations par le biais d'une communication sans fil à partir desdits éléments de circuit RFID (To-B, To-M) positionnés à l'intérieur de ladite plage de communication (S), au moyen de chaque protocole de communication qui sont commutés un à un par lesdits moyens de commutation de protocole (142) ; et
lesdits moyens d'exécution d'une opération de stockage (APR', CPR') comprennent des premiers moyens de traitement d'association (CPR') et des deuxièmes moyens de traitement d'association (APR'), lesdits premiers moyens de traitement d'association (CPR') ayant pour fonction d'associer des troisièmes informations d'identification
d'étiquette d'un troisième élément de circuit RFID (To-M) à des quatrièmes informations d'identification d'étiquette d'un quatrième élément de circuit RFID (To-B), lesdites troisièmes informations d'identification d'étiquette étant acquises à partir dudit troisième moyen d'acquisition d'informations (143) au moyen d'un troisième protocole de communication auquel une commutation est exécutée par lesdits moyens de commutation de protocole (142), lesdites quatrièmes informations d'identification d'étiquette étant acquises à partir dudit troisième moyen d'acquisition d'informations (143) au moyen d'un quatrième protocole de communication auquel une commutation est exécutée par lesdits moyens de commutation de protocole (142) ; lesdits deuxièmes moyens de traitement d'association (APR') ayant pour fonction d'associer un premier objet cible correspondant au dit troisième élément de circuit RFID (To-M) à un deuxième objet cible correspondant au dit quatrième élément de circuit RFID (To-B), sur la base d'un résultat de traitement délivré en sortie par lesdits premiers moyens de traitement d'association (CPR').

7. Dispositif de communication avec des étiquettes RFID (300) selon la revendication 6, **caractérisé en ce que** :
lesdits premiers moyens de traitement d'association (CPR') associent lesdites troisièmes informations d'identification d'étiquette aux dites quatrièmes informations d'identification d'étiquette acquises par ledit troisième moyen d'acquisition d'informations (143) quand lesdits moyens de commutation de protocoles (142) exécutent une commutation parmi ladite pluralité de protocoles de communication en commutant ladite pluralité de protocoles les uns après les autres selon une séquence prédéterminée, ou dans lequel
lesdits premiers moyens de traitement d'association (CPR') associent lesdites troisièmes informations d'identification d'étiquette aux dites quatrièmes informations d'identification d'étiquette acquises durant à la fois un premier passage et un deuxième passage dans un cas où un résultat d'acquisition dudit troisième moyen d'acquisition d'informations (143) dudit premier passage, quand lesdits moyens de commutation de protocole (142) ont exécuté une commutation parmi ladite pluralité de protocoles de communication en effectuant un passage au travers de ladite pluralité de protocoles de communication selon une séquence prédéterminée, coïncide avec un résultat d'acquisition dudit troisième moyen d'acquisition d'informations (143) dudit deuxième passage quand lesdits moyens de commutation de protocole (142) ont ensuite exécuté une commutation parmi ladite pluralité de protocoles de communication en commutant ladite pluralité de protocoles les uns après les autres selon une séquence prédéterminée, ou dans lequel
lesdits premiers moyens de traitement d'association (CPR') associent lesdites troisièmes informations d'identification d'étiquette aux dites quatrièmes informations d'identification d'étiquette acquises dans un cas où lesdits moyens de commutation de protocole (142) exécutent une commutation parmi ladite pluralité de protocoles de communication en effectuant un passage au travers de ladite pluralité de protocoles selon une séquence prédéterminée et en répétant le passage, et les résultats d'acquisition dudit troisième moyen d'acquisition d'informations (143) à l'intérieur d'une plage de temps prédéterminée (T) coïncident les uns avec les autres.

8. Dispositif de communication avec des étiquettes RFID (7) selon la revendication 7, **caractérisé en ce que** :
ledit troisième moyen d'acquisition d'informations (143) exécute ledit traitement d'acquisition d'informations une pluralité de fois par rapport à l'un des protocoles de communication inclus dans ladite pluralité de protocoles de communication, et exécute ledit traitement d'acquisition d'informations une seule fois au moyen de tous les autres protocoles de communication autres que ledit un protocole de communication, quand lesdits moyens de commutation de protocole (142) exécutent une commutation parmi ladite pluralité de protocoles de communication en commutant ladite pluralité de protocoles les uns après les autres selon ladite séquence prédéterminée.

9. Dispositif de communication avec des étiquettes RFID (300) selon la revendication 8, **caractérisé en ce que** :
lesdits moyens de commutation de protocole (142) exécutent une commutation à un sous-protocole dudit l'un des protocoles de communication au cours de la séquence suivante dudit l'un des protocoles de communication quand une commutation est exécutée parmi ladite pluralité de protocoles de communication en effectuant un passage au travers de ladite pluralité de protocoles de communication selon ladite séquence prédéterminée ; et
ledit troisième moyen d'acquisition d'informations exécute ledit traitement d'acquisition d'informations une seule fois au moyen dudit l'un des protocoles de communication et exécute ledit traitement d'acquisition d'informations une seule fois au moyen dudit sous-protocole en réponse à ladite commutation par lesdits moyens de commutation de protocole (142).

10. Système de communication avec des étiquettes RFID (RS) qui est apte à communiquer avec une pluralité d'éléments de circuit (To-B, To-M), chacun des éléments de circuit RFID (To-B, To-M) ayant une antenne d'étiquette (151) qui transmet et reçoit des informations et une section de circuit intégré (150) qui stocke des informations, le système comprenant un dispositif de communication avec des étiquettes RFID (100) et un terminal de commande (200) dans le but de permettre un fonctionnement dudit dispositif de communication avec des étiquettes RFID (100),
dans lequel :
ledit dispositif de communication avec des étiquettes RFID (100) comprend :
une antenne de communication (101) pour former une plage de communication (S) qui comprend lesdits éléments de circuit RFID (To-B, To-M) et pour exécuter une communication sans fil ; et
au moins un moyen d'acquisition d'informations (143) pour tenter d'acquérir des informations d'identification d'étiquette à partir desdits éléments de circuit RFID (To-B, To-M) positionnés à l'intérieur de ladite plage de communication (S) par le biais d'une utilisation sélective d'une pluralité de protocoles de communication qui sont différents les uns des autres ;
**caractérisé en ce que** :
ledit terminal de commande (200) comprend des moyens d'exécution d'une opération de stockage (CPM ; APM', APR', CPM', CPR') pour exécuter une opération de stockage prédéterminée au cours de laquelle chaque information d'identification d'étiquette acquise est associée au protocole de communication utilisé pour acquérir ladite information d'identification d'étiquette.

11. Système de communication avec des étiquettes RFID (RS) selon la revendication 10, **caractérisé en ce que** :
ladite pluralité de protocoles de communication comprend un premier protocole de communication et un deuxième protocole de communication qui sont différents l'un de l'autre ;
ladite antenne de communication (101) forme une première plage de communication qui comprend un premier élément de circuit RFID (To-M) et un deuxième élément de circuit RFID (To-B) pour exécuter une communication sans fil, ledit premier élément de circuit RFID (To-M) ayant une première antenne d'étiquette (151) qui transmet et reçoit des informations au moyen dudit premier protocole de communication et une première section de circuit intégré (150) qui stocke des informations ; ledit deuxième élément de circuit RFID (To-B) ayant une deuxième antenne d'étiquette (151) qui transmet et reçoit des informations au moyen dudit deuxième protocole de communication et une deuxième section de circuit intégré (150) qui stocke des informations ;
ledit au moins un moyen d'acquisition d'informations (143) comprend un premier moyen d'acquisition d'informations (143) et un deuxième moyen d'acquisition d'informations (143), ledit premier moyen d'acquisition d'informations (143) acquérant des premières informations d'identification d'étiquette à partir dudit premier élément de circuit RFID (To-M) positionné à l'intérieur de ladite première plage de communication par le biais d'une communication sans fil au moyen dudit premier protocole de communication ; ledit deuxième moyen d'acquisition d'informations (143) acquérant des deuxièmes informations d'identification d'étiquette à partir dudit deuxième élément de circuit RFID (To-B) positionné à l'intérieur de ladite première plage de communication par le biais d'une communication sans fil au moyen dudit deuxième protocole de communication ;
et
lesdits moyens d'exécution d'une opération de stockage (CPM) comprennent des deuxièmes moyens de stockage (CPM) pour stocker lesdites premières informations d'identification d'étiquette dudit premier élément de circuit RFID (To-M) en association avec ledit premier protocole de communication, et lesdites deuxièmes informations d'identification d'étiquette dudit deuxième élément de circuit RFID (To-B) en association avec ledit deuxième protocole de communication.

12. Système de communication avec des étiquettes RFID (RS) selon la revendication 11, **caractérisé en ce que** :
ledit dispositif de communication avec des étiquettes RFID (100) est apte à exécuter une communication par le biais d'une commutation sélective parmi une pluralité de paramètres de communication qui comprennent un premier paramètre de communication et un deuxième paramètre de communication,
ledit premier moyen d'acquisition d'informations (143) dudit dispositif de communication avec des étiquettes RFID (100) acquiert lesdites premières informations d'identification d'étiquette à partir dudit premier élément de circuit RFID (To-M) positionné à l'intérieur de ladite première plage de communication par le biais d'une communication sans fil au moyen dudit premier paramètre de communication ;
ledit deuxième moyen d'acquisition d'informations (143) dudit dispositif de communication avec des étiquettes RFID (100) acquiert lesdites deuxièmes informations d'identification d'étiquette à partir dudit deuxième élément de circuit RFID (To-M) positionné à l'intérieur de ladite première plage de communication par le biais d'une communication sans fil au moyen dudit deuxième paramètre de communication ; et
lesdits deuxièmes moyens de stockage (CPM) dudit terminal de commande (200) stockent lesdites premières informations d'identification d'étiquette dudit premier élément de circuit RFID (To-M) en association avec ledit premier paramètre de communication, et stockent lesdites deuxièmes informations d'identification d'étiquette dudit deuxième élément de circuit RFID (To-B) en association avec ledit deuxième paramètre de communication, sur la base des résultats d'acquisition d'informations dudit premier moyen d'acquisition d'informations (143) et dudit deuxième moyen d'acquisition d'informations (143), ou dans lequel
ledit terminal de commande (200) comprend par ailleurs des moyens de génération de données en écriture (S217) pour générer des premières données en écriture pour écrire dans ladite première section de circuit intégré (150) dudit premier élément de circuit RFID (To-M), ou pour générer des deuxièmes données en écriture pour écrire dans ladite deuxième section de circuit intégré (150) dudit deuxième élément de circuit RFID (To-B) ; et
ledit dispositif de communication avec des étiquettes RFID (100) comprend par ailleurs des moyens de transmission de données en écriture (142) pour envoyer lesdites premières données en écriture au dit premier élément de circuit RFID (To-M) par le biais d'une communication sans fil au moyen d'au moins ledit premier protocole de communication parmi ledit premier protocole de communication et ledit premier paramètre de communication, ou pour envoyer lesdites deuxièmes données en écriture au dit deuxième élément de circuit RFID (To-B) par le biais d'une communication sans fil au moyen d'au moins ledit deuxième protocole de communication parmi ledit deuxième protocole de communication et ledit deuxième paramètre de communication, au moyen de ladite antenne de communication (101) et sur la base du contenu de stockage desdits deuxièmes moyens de stockage (CPM) dudit terminal de commande (200).

13. Système de communication avec des étiquettes RFID (RS) selon la revendication 12, **caractérisé en ce que** :
ledit terminal de commande (200) comprend :
des deuxièmes moyens de commande (202) pour permettre l'exécution d'une entrée de commande par un opérateur ;
une deuxième section de traitement d'application (AP) pour exécuter un traitement d'une entrée de commande dudit opérateur au moyen desdits deuxièmes moyens de commande (202) en accord avec un programme d'application prédéterminé et pour générer un signal de commande de traitement correspondant à ladite entrée de commande ; et
une deuxième section de traitement de communication (CP) comprenant lesdits deuxièmes moyens de stockage (CPM) et pour commander ledit dispositif de communication avec des étiquettes RFID (100) sur la base du signal de commande de traitement généré par ladite deuxième section de traitement d'application (AP).

14. Système de communication avec des étiquettes RFID (RS) selon la revendication 10, **caractérisé en ce que** :
ladite plage de communication (S) comprend en même temps ladite pluralité d'éléments de circuit RFID (To-B, To-M) correspondant respectivement à ladite pluralité de protocoles de communication qui sont différents les uns des autres, pour exécuter une communication sans fil, et
ledit dispositif de communication avec des étiquettes RFID (100) comprend par ailleurs des moyens de commutation de protocole (142) pour exécuter une commutation un à un parmi ladite pluralité de protocoles de communication ;
ledit au moins un moyen d'acquisition d'informations (143) comprend un troisième moyen d'acquisition d'informations (143) pour exécuter une opération d'acquisition pour tenter d'acquérir des information par le biais d'une communication sans fil à partir desdits éléments de circuit RFID (To-B, To-M) positionnés à l'intérieur de ladite plage de communication (S), au moyen de chaque protocole de communication qui sont commutés un à un par ledit moyens de commutation de protocole (142) ; et
lesdits moyens d'exécution d'une opération de stockage (APM', APR', CPM', CPR') comprennent des troisièmes moyens de traitement d'association (CPR') et des quatrièmes moyens de traitement d'association (APR'), lesdits troisièmes moyens de traitement d'association (CPR') ayant pour fonction d'associer des troisièmes informations d'identification d'étiquette d'un troisième élément de circuit RFID (To-M) à des quatrièmes informations d'identification d'étiquette d'un quatrième élément de circuit RFID (To-B), lesdites troisièmes informations d'identification d'étiquette étant acquises à partir dudit troisième moyen d'acquisition d'informations (143) au moyen d'un troisième protocole de communication auquel une commutation est exécutée par lesdits moyens de commutation de protocole (142), lesdites quatrièmes informations d'identification d'étiquette étant acquises à partir dudit troisième moyen d'acquisition d'informations (143) au moyen d'un quatrième protocole de communication auquel une commutation est exécutée par lesdits moyens de commutation de protocole (142) ; lesdits quatrièmes moyens de traitement d'association (APR') ayant pour fonction d'associer un troisième objet cible correspondant au dit troisième élément de circuit RFID (To-M) à un deuxième objet cible correspondant au dit quatrième élément de circuit RFID (To-B), sur la base d'un résultat de traitement délivré en sortie par lesdits troisièmes moyens de traitement d'association (CPR').

15. Système de communication avec des étiquettes RFID (RS) selon la revendication 14, **caractérisé en ce que** :
ledit terminal de commande (200) comprend :
des troisièmes moyens de commande (202) pour permettre l'exécution d'une entrée de commande par un opérateur,
une troisième section de traitement d'application (AP) pour exécuter un traitement d'une entrée de commande dudit opérateur au moyen desdits troisièmes moyens de commande (202) en accord avec un programme d'application prédéterminé et pour générer un signal de commande de traitement correspondant à ladite entrée de commande, et
une troisième section de traitement de communication (CP') pour commander ledit dispositif de communication avec des étiquettes RFID (100) sur la base d'un signal de commande de traitement généré par ladite troisième section de traitement d'application (AP) ; et
lesdits quatrièmes moyens de traitement d'association (APR') sont prévus dans ladite troisième section de traitement d'application (AP') ; et
lesdits troisièmes moyens de traitement d'association (CPR') sont prévus dans ladite troisième section de traitement de communication (CP').

16. Système de communication avec des étiquettes RFID (RS) selon la revendication 15, **caractérisé en ce que** :
ladite troisième section de traitement d'application (AP') délivre en sortie ledit signal de commande de traitement pour une lecture d'informations en accord avec l'entrée de commande dudit opérateur au moyen desdits troisièmes moyens de commande (202) ;
ledit troisième moyen d'acquisition d'informations (143) acquiert lesdites troisièmes informations d'identification d'étiquette au moyen dudit troisième protocole de communication, et acquiert lesdites quatrièmes informations d'identification d'étiquette au moyen dudit quatrième protocole de communication, sur la base de la commande exécutée par ladite troisième section de traitement de communication (CP') en accord avec ledit signal de commande de traitement pour fournir des instructions pour ladite lecture d'informations ;
lesdits troisièmes moyens de traitement d'association (CPR') de ladite troisième section de traitement de communication (CP') associent lesdites troisièmes informations d'identification d'étiquette aux dites quatrièmes informations d'identification d'étiquette acquises par ledit troisième moyen d'acquisition d'informations (143), et délivrent collectivement en sortie les troisièmes informations d'identification d'étiquette et les quatrièmes informations d'identification d'étiquette à ladite troisième section de traitement d'application (AP') ; et
lesdits quatrièmes moyens de traitement d'association (APR') de ladite troisième section de traitement d'application (AP') associent ledit premier objet cible au dit deuxième objet cible sur la base desdites troisièmes informations d'identification d'étiquette et desdites quatrièmes informations d'identification d'étiquette associées les unes aux autres.
